Europäisches Patentamt

(19) European Patent Office

Office européen des brevets

(11) Publication number : **0 467 353 B1**

# (12) EUROPEAN PATENT SPECIFICATION

(45) Date of publication of patent specification :
16.03.94 Bulletin 94/11

(51) Int. Cl.⁵ : **B60K 31/00**

(21) Application number : **91111987.3**

(22) Date of filing : **18.07.91**

(54) **Auto-drive control apparatus for use in vehicle.**

(30) Priority : **19.07.90 JP 191390/90**
**15.11.90 JP 310773/90**
**19.03.91 JP 54500/91**
**21.06.91 JP 150039/91**

(43) Date of publication of application :
**22.01.92 Bulletin 92/04**

(45) Publication of the grant of the patent :
**16.03.94 Bulletin 94/11**

(84) Designated Contracting States :
**DE FR GB IT**

(56) References cited :
**DE-A- 3 841 386**
**US-A- 4 803 637**
**US-A- 4 926 334**
**US-A- 4 939 657**
**PATENT ABSTRACTS OF JAPAN, unexamined
applications, M field, vol. 13, No. 415, September 13, 1989 THE PATENT OFFICE JAPANESE
GOVERNMENT page 88 M 870**

(73) Proprietor : **MATSUSHITA ELECTRIC
INDUSTRIAL CO., LTD.**
**1006, Oaza Kadoma**
**Kadoma-shi, Osaka-fu, 571 (JP)**

(72) Inventor : **Ishida, Akira**
**440-305, Nishino**
**Sakai-shi, Osaka-fu (JP)**
Inventor : **Takada, Masahiro**
**14-17, Nasuzukurikita-machi**
**Hirakata-shi, Osaka-fu (JP)**
Inventor : **Narazaki, Kazushige**
**5-5-205, Myokenzaka**
**Katano-shi, Osaka-fu (JP)**
Inventor : **Ito,Osamu**
**15-35, Sengokuhigashi-machi**
**Kadoma-shi, Osaka-fu (JP)**

(74) Representative : **Eisenführ, Speiser & Partner**
**Martinistrasse 24**
**D-28195 Bremen (DE)**

## Description

## BACKGROUND OF THE INVENTION

### Field of the Invention

The present invention relates to an apparatus for use in a vehicle for allowing the vehicle to travel at a constant speed.

### Description of the Related Arts

In a conventional constant speed travel control apparatus of a vehicle, the actual speed of a vehicle is detected by a sensor and a target speed is set by a driver. An object to be controlled by an apparatus comprises a system of one output for one input represented by $V(s)/U(s) = b/(s+a)$ ($s$ is Laplace operator, $V(s)$ is vehicle speed, $U(s)$ is instruction voltage of actuator, $a$ is unknown characteristic, and $b$ is unknown input distribution characteristic) and various feed-back system based on PID control is constituted to make a constant speed travel control. At this time, dynamic characteristic is changed by the change of the number of speeds, the change of travel load, namely, the change of road gradient, the change of air resistance, and the weight change of the vehicle. As a result, the convergence of the actual speed on the target speed is not always constant.

In order to obtain a constant convergence performance of the actual speed on the target speed notwithstanding the change of the dynamic characteristic of the vehicle, it is necessary to adjust a plurality of control gains for calculating the operation amount to be outputted to the actuator for driving a throttle valve according to the change of the number of speeds and the change of travel load. Much labor is required in this adjustment. As disclosed in Japanese Patent Laid-Open Publication No. 1-153344 corresponding to DE-A-3 841 386, the operation amount to be outputted to the throttle valve is calculated by (P + 1 - P + D) control and a travel load is calculated by the difference between a current opening amount of the throttle valve and the opening amount thereof required for a constant travel on a plane ground, and the proportional constant of a forward control system (P + 1) and the integration constant thereof are made to be great while the proportional constant of a negative feed-back control system (P + D) and the differential constant thereof are made to be small according to the increase of travel load. Thus, the convergence of the actual speed on the target speed is set at a constant value notwithstanding the difference of the travel load and consequently, a favorable constant speed travel control is achieved.

A similar apparatus is disclosed in US-A-4 939 657.

However, in the conventional apparatus based on the feed-back control by (P+1 - P+D) control, the operation required for the object to be controlled is the PTP (point to point) operation for moving the target point (vehicle speed) from a fixed point to a fixed point. That is, an operation guaranteed by the conventional apparatus is only a movement operation from a speed at a certain point in travel to a set target speed and is unsuitable for a CP (continuous path) operation in which the target point moves continuously. That is, the following performance is not guaranteed for a target path speed for converging an actual speed on the target speed and therefore, it is very difficult for the conventional PID control to obtain a constant convergence performance, namely, to converge the actual speed at a constant rate, namely, converge the actual speed on the target speed along the same target path. Further, in controlling the speed of vehicles of many kinds, a path cannot be followed up by all vehicles according to the difference of engine power. Thus, the conventional apparatus is incapable of generating an appropriate path by the same software.

In addition, the above construction has the following problems. That is, in a vehicle, the input distribution characteristic $b$ of the object to be controlled changes two to three times due to the fluctuation of a travel load. But a control input which operates stably and the actual speed follows the target path favorably by appropriately switching each constant of PID, namely, control gain. However, with the same software, the control gain developed for only one kind of vehicle is incapable of allowing a control output to follow the target path in other kinds of vehicles. It is difficult for the conventional PID control to vary the control gain for other kinds of vehicles and constitute a robust control system.

## SUMMARY OF THE INVENTION

It is therefore an object of the present invention to provide a constant speed travel control apparatus for use in a vehicle in which the actual speed of the vehicle converges on the target speed thereof with a constant convergence performance along a given path in spite of the fluctuation of vehicle dynamic characteristic which occurs due to, for example, the change of a gear condition or the change of a travel load. In order to accomplish the above object, the present invention introduces a concept that a fluctuation during a slight time is constant is introduced. That is, using time delay control which is a kind of adaptive control for estimating an unknown term, a plurality of targeted paths, having a certain waveform, for the actual speed of the vehicle to converge on the target speed are provided and an error vector is defined on the basis of the paths.

It is another object of the present invention to provide a constant speed travel control apparatus for use in a vehicle in which a constant speed travel control is made in conformity with a driver's desire owing to the provision of a plurality of target paths.

It is still another object of the present invention to provide a constant speed travel control apparatus for use in a vehicle in which the setting time of a target path along which the actual speed converges on the target speed can be switched according to the degree of the deviation between the actual speed in resuming operation and the target speed.

It is a further object of the present invention to provide a constant speed travel control apparatus for use in a vehicle in which a target path appropriate for a vehicle can always be obtained by constructing a rule for correcting the target path in conformity with the limited capability of each vehicle according to the deviation between the actual speed of the vehicle and the target path thereof or the differentiated value of the deviation and the average speed of the operation of an actuator and the position thereof.

It is a still further object of the present invention to provide a constant speed travel control apparatus for use in a vehicle in which the output of an object of a system of one output for one input-one favorably follows the target path by updating the upper limit of the initial value bset0 of a control input characteristic best, namely, the initial value best0 thereof at the time of the initial setting or a resuming operation so as to limit the fluctuation range of the control input characteristic best to a small range. That is, the actual input distribution characteristic b of the object is unknown. Therefore, there is a case in which the control input characteristic best which is the control gain in a controller is inappropriate. Based on the qualitative relationship between input and output, a rule for altering the control input characteristic best necessary for performing a control amount according to the deviation or the differentiated value thereof and the average speed of the actuator and the position thereof is constructed .

In accomplishing these and other objects, there is provided an apparatus for allowing a vehicle to travel at a constant speed comprising the subject-matters of claim 1.

Preferred embodiments of the invention are defined in the dependent claims.

According to the above construction, a plurality of normalized paths, for example, speedy, normal, and slow paths having a desired response waveform at a return time are set so that a driver selects a desired response waveform, namely, a target path. The operation amount for adjusting the opening amount of a throttle valve is calculated by time delay control of path following type in which the difference between the target path speed and the actual speed is an error vector. Thus, an actuator can be controlled so that the convergence of the actual speed on the target speed always coincides with the path of a desired response waveform without being affected by the change of the position of speed change gears and the fluctuation of a travel load. Therefore, a vehicle can be controlled so that it travels at a constant speed with the actual speed stably converging on the target speed. Further, a plurality of normalized target paths having a different convergence period of time are set. Thus, a desired target path is selected from the plurality of normalized target paths according to the deviation between the target path and the actual speed. Therefore, a smooth response waveform can be obtained irrespective of different deviations. Further, the initial control input characteristic best0 is set to the maximum value $b_{MAX}$ of the input distribution characteristic b of all kinds of vehicles equipped with the apparatus and the target path amending means amends a target path speed already found to a new one using the deviation between the target path speed and the actual speed or at least one differentiated value of the deviation and the average speed of the actuator and the position thereof. A smooth response waveform can be obtained according to the capability of each vehicle for a resuming operation during a travel by using the amended target path speed. If the control input characteristic best is different a great deal from the input distribution characteristic b equipped with the apparatus, the control input coefficient determining means amends the control input characteristic best by using the deviation or at least one differentiated value of the deviation value, the average speed of the actuator, and the position thereof. The control amount operation means calculates a control input by using a found control input characteristic and the convergence performance of the actual speed on the target speed can be made at a constant value without being affected by the change of the dynamic characteristic due to, for example, the fluctuation of a travel load, with the actual speed following the target speed stably and preferably. In addition, observing the condition of the change of the updated control input characteristic, the coefficient range amending means updates the initial control characteristic best0 which is the maximum value of the control input characteristic and the minimum control input characteristic best1 so as to update the allowable fluctuation range of the control input characteristic. Thus, the initial control characteristic best0 at the initial setting or in a resuming operation approaches the input distribution characteristic b of a vehicle according to a travel condition irrespective of kind of vehicle. The initial control input calculating means finds the initial control input amount U(0) by using best0. As a result, the speed reduction of can be prevented greatly. Thus, the actual speed follows the target speed stably and preferably. Further, the return acceleration $\alpha$ providing the target path in convergence in a resuming operation can be altered so that the differentiated value of the target path speed Vd(t) is reduced to a great extent and the convergence acceleration altering means allows the target path speed to smoothly converge on the target speed. Therefore, an overshoot or an undershoot can be prevented from occurring to a great extent during a convergence. If the deviation between the target path speed and the actual speed exceeds a certain value due to a speed reduction at a resuming operation, the initial target path altering means reduces the target path speed to the actual speed. Therefore, a stable constant speed travel can be accomplished.

As apparent from the foregoing description, a plurality of waveform paths are provided and time delay control of path following type is provided. Thus, a driver can obtain can select a desired response and enjoy a comfortable constant speed travel by changing the convergence period of time according to the deviation between the actual speed and the target speed.

The target path amending means provides a stable and smooth response without setting a target path according to a vehicle in advance. If many kinds of vehicles are provided with the apparatus, there is a case in which an unknown input distribution characteristic b is different greatly from the control input characteristic best. At this time, the control input coefficient determining means alters best. Thus, the actual speed follows the target path speed favorably.

The coefficient range amending means updates the initial control input characteristic best0, and the initial control input calculating means finds an initial gain according to the kind of a vehicle and calculates the initial control input amount at the initial setting or in a resuming operation. Thus, an overshoot can be prevented from occurring greatly even though a speed is reduced at the initial setting or in a resuming operation. The target path setting means provides a path by a return acceleration $\alpha$, so that the convergence period of time can be changed according to the deviation between the actual speed and the target speed, and the return acceleration a can be switched to a return acceleration conforming to a vehicle capability and a road situation. As a result, a stable and smooth response can be obtained in the resuming operation. In addition, the convergence acceleration altering means reduces the acceleration $\alpha$ at a certain rate. Thus, the change rate of convergence of the target path speed on the target speed is small and thus, discontinuity does not occur because no sudden change of the target path takes place, with an overshoot or undershoot prevented from occurring. Hence, a stable constant speed travel can be accomplished. Furthermore, if the deviation is more than a certain value, the initial target path altering means alters the actual speed to a different one. Therefore, time is not wasted due to the loosening of a throttle wire. Hence, a favorable constant speed travel can be performed with a preferable response to the resuming operation.

## BRIEF DESCRIPTION OF THE DRAWINGS

These and other objects and features of the present invention will become apparent from the following description taken in conjunction with the preferred embodiments thereof with reference to the accompanying drawings, in which:

Fig. 1 is a construction view showing the concept of a first embodiment of the present invention;

Fig. 2 is a construction view showing the concept of a second embodiment of the present invention;

Fig. 3 is an entire construction view showing an embodiment of the present invention;

Fig. 4 is a control block diagram;

Fig. 5 is a construction view of trajectory following time delay controller;

Fig. 6 is a view showing a normalized target path provided by a first invention;

Fig. 7 is a view showing a target path speed calculating means to be used in a second invention;

Fig. 8 is a construction view of the control concept of an embodiment according to present invention;

Fig. 9 is a construction view showing the concept of a third embodiment of the present invention;

Fig. 10 is a flowchart showing the fundamental procedure of a target path amending means to be used in the third embodiment;

Fig. 11 is a descriptive view showing the method for amending a target path to be used in the third embodiment;

Fig. 12 is a construction view showing the concept of a fourth embodiment of the present invention;

Fig. 13 is a construction view showing the concept of a fifth embodiment of the present invention;

Fig. 14 is a concept view showing the speed response of the initial target path altering means and a control input amount of the fifth embodiment of the present invention;

Fig. 15 is a construction view showing the concept of a sixth embodiment of the present invention;

Fig. 16 is a descriptive view of the control input coefficient determining means of the seventh embodiment;

Figs. 17 (a) and 17 (b) are flowcharts showing the procedure of the control input coefficient determining means of the seventh embodiment;

Fig. 18 is a construction view showing the concept of a seventh embodiment of the present invention;

Figs. 19 (a) and 19 (b) are flowcharts showing the procedure of the coefficient range amending means and the initial control input calculating means to be used in the seventh embodiment according to the present invention;

Figs. 20 (a) to 20 (f) are graphs showing experimental results (chassis dynamometer) of a vehicle under the time delay control using a target path of sine waveform;

Fig. 21 and Fig. 22 are graphs showing test results (chassis dynamometer) of vehicles to examine the target path altering means;

Fig. 23 and Fig. 24 are graphs showing experimental result data (actual road) of vehicle by using the control input coefficient determining means; and

Fig. 25 (a) to Fig. 25 (d) and Fig. 26 (a) to Fig. 26 (d) show experimental results on a chassis dynamometer of vehicles.

Before the description of the present invention proceeds, it is to be noted that like parts are designated by like reference numerals throughout the accompanying drawings.

Referring to the accompanying drawings, the embodiment of the present invention are described below.

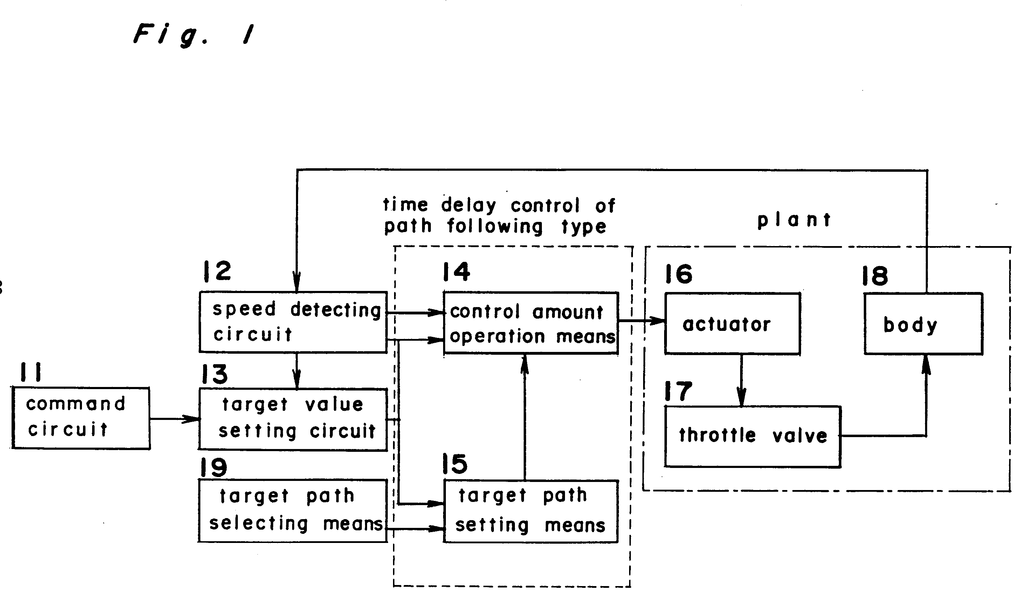

First, the system construction and the construction of the control system of a constant speed cruising control system for use in a vehicle are described below. Fig. 1 is a construction view showing a first embodiment of the present invention conceptually. A command circuit 11 outputs a constant speed cruising control command signal, a resuming signal for returning the current speed to the previous constant speed after a constant speed cruising command is cancelled, and an increase/decrease signal for increasing or decreasing the speed during the constant speed cruising. In response to the constant speed cruising command signal from the command circuit 11 to a speed detecting circuit 12, the speed detecting circuit 12 detects an actual speed. In response to the constant speed cruising control start signal from the speed detecting circuit 12, a target value setting circuit 13 sets a target speed. A target path setting means 15 outputs a signal indicting several paths having a desired response waveform in a resuming operation. A target path selecting means 19 is provided for a driver to select a path from several paths provided by the target path setting means 15. Based on the target path speed, the actual speed, and the target speed, a control amount operation means 14 performs an operation of a control input to a plant, namely, a control input to an actuator 16 so that the actual speed converges on the target speed in a desired response waveform, namely, an error between the actual speed and the target path speed is zero. That is, the control amount operation means 14 and the target path setting means 15 are time delay control of trajectory following type. A control object, namely, the plant comprises the actuator 16, a throttle valve 17, and a body 18. According to the above operation, the opening amount of the throttle vale 17 is adjusted by the actuator 16. As a result, the speed converges on the target speed in a desired response waveform. That is, the constant speed cruising control can be made at the target speed in a stable condition.

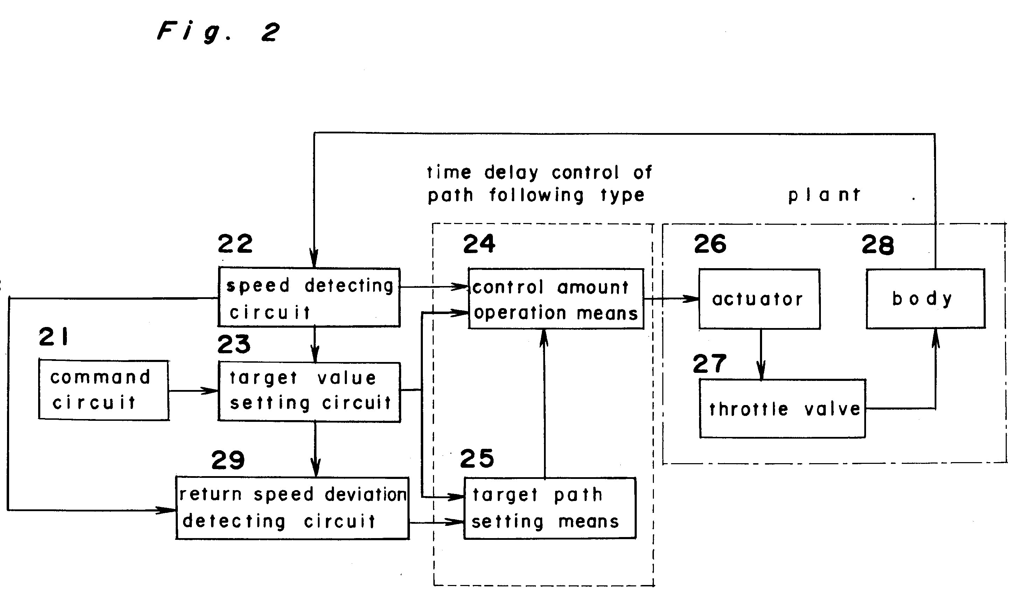

Fig. 2 is a construction view showing a second embodiment of the present invention conceptually. When the vehicle speed is to return to a target speed set by a target value setting circuit 23 by a resuming operation of a command circuit 21 with the constant speed cruising cancelled, an actual speed at which the vehicle has started is detected by a speed detecting circuit 22. A return speed deviation detecting means 29 detects the deviation between the target speed and the actual speed. A target path setting means 25 selects a target path corresponding to the value detected by the return speed deviation detecting means 29 from a plurality of target paths different from each other in convergence period of time, thus outputting a signal indicating the target path to a control amount operation means 24. Based on the target path speed found according to the value of the initial deviation, the actual speed, and the target speed, the control amount operation means 24 calculates a control amount so that the actual speed converges on the target speed in a desired response waveform, namely, so that the actual speed converges along the target path, thus outputting a signal indicating the control amount to the plant comprising an actuator 26, a throttle vale 27, and a body 28.

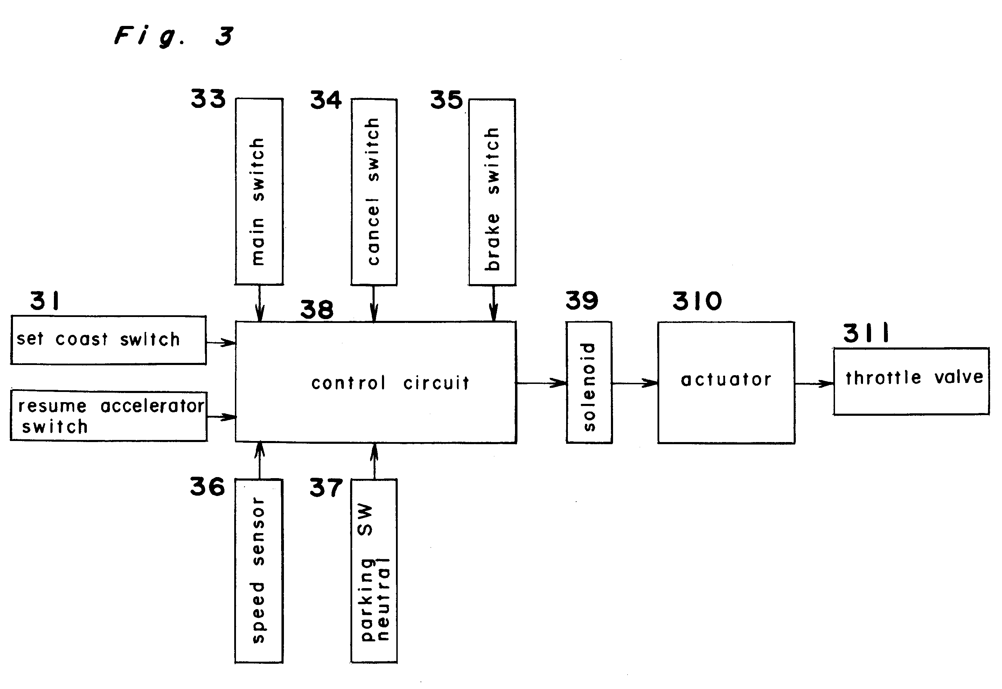

Fig. 3 shows the system construction of an embodiment of the present invention. The system comprises a control circuit 38 comprising a CPU, a ROM, a RAM, and an I/O; a main switch 33 for supplying electric current to the power source of an actuator and the control circuit 38; a switch 31 for use as a set/switch for setting a target speed or as a coast switch for setting a lower target speed; a resuming switch/acceleration switch 32 for returning the vehicle speed to the target speed and setting a higher target speed; a brake switch 35 which is turned on when the brake pedal is stepped down; a cancellation switch 34 for cancelling the setting and resuming functions; a speed sensor 36 for detecting an actual speed; an N/P switch 37 for detecting that the number of speeds is at the neutral position or the parking position; and a solenoid 39 for supplying electric current to an actuator 310 or cutting it off the actuator 310 when constant speed cruising starts or terminates. When a constant speed cruising control starts by turn-on of the set switch 31 or the resuming switch 32, the solenoid 39 is turned on according to the instruction of the control circuit 38 and the difference between the actual speed detected by the speed sensor 36 and a target speed set is calculated. A target path speed is found based on the difference thus calculated and information, for example, normalized target path data for generating a target path contained in the ROM. The control amount is calculated so that the error between the target path speed and the actual speed is zero.

Then, the control amount is outputted to the actuator 310. As a result, the actuator 310 opens or closes a throttle valve 311 and adjusts a fuel amount to be supplied to the engine. Thus, the constant speed cruising control is accomplished.

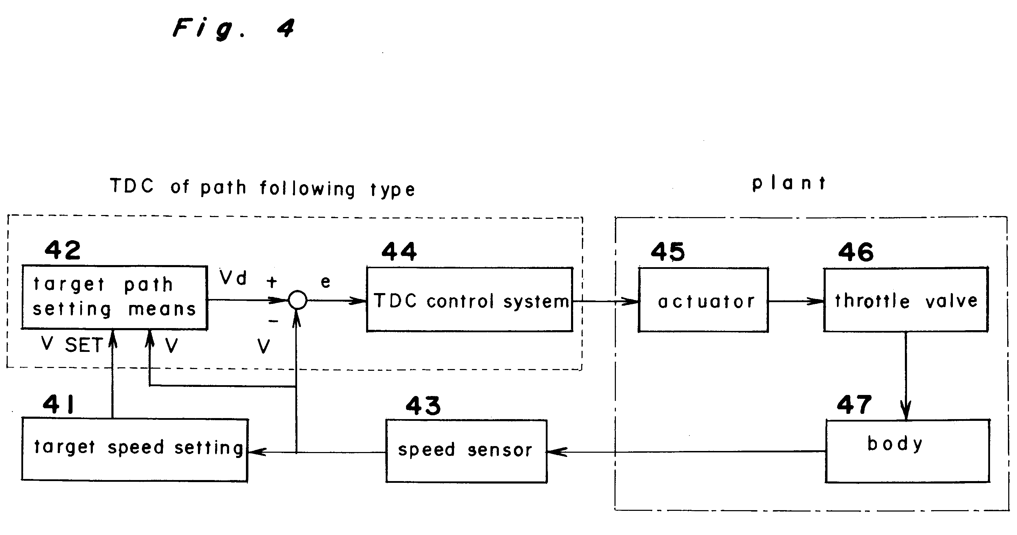

Fig. 4 is the control block diagram of the above-described embodiment. The concept of time delay control (TDC) of trajectory following type which is a kind of adaptive control is described below with reference to Fig. 4. Upon receipt of an input U of a target opening amount, an actuator 45 controls a speed V by adjusting the opening amount of a throttle valve 46. The speed V is read by a speed sensor 43. The actual speed set by the target value setting circuit is stored in a target speed setting means 41 as a target speed Vset. When the resuming switch 32 is turned on, a target path setting means 42 provides a target path speed Vd in the form of a time function according to the difference between the actual speed V and the target speed Vset. The target path speed Vd is provided in time series of a desired response waveform in a convergence. The control amount U to be outputted to the actuator 45 is calculated by a TDC control system 44 so that the deviation between the actual speed V and the target path speed Vd is zero. When the actual speed V is set, the target speed Vset is the target path speed Vd.

According to the above operation, the actual speed V follows the target speed Vset in a desired response characteristic, a speed control which follows the target path speed Vd can be made. That is, a constant speed cruising control to make the convergence performance stable and constant can be achieved. The design of the control system of the time delay control (TDC) of trajectory following type is described below.

First, the transfer function of the plant is found. Supposing that the target opening amount input to the actuator 45 is U(S) and the actual speed is the output V(S) thereof, a transfer function G(S) is expressed by the following equation:

$$G(S) = b/(s + a) \quad (1)$$

The transfer function of the plant is found by approximating it supposing that it is of linear function, but actually, a parameter varies according to a travel condition. Therefore, it is a plant expressed by a non-linear function including dead time. The TDC is a controller effective for a system having an unknown dynamic characteristic. The control rule of trajectory following type suitable for a CP continuous path operation is found with respect to a plant expressed by a non-linear function below. The control rule of trajectory following type is described in detail in "A trajectory following time delay controller and its application to robot manipulator control" written by Osamu Itoh et al. in journal of Precision Engineering of Japan 55/12/1989.

Expressing the equation (1) in terms of time domain, the following equation is obtained. Differentiation is expressed by d/dt.

$$dV(t)/dt = -aV(t) + bU(t) \quad (2)$$

where "a" and "b" are unknown, and fluctuation range is known as below.

$$0 < amin < a < amax \quad (3)$$
$$0 < bmin < b < bmax \quad (4)$$

The target path speed of the speed V is Vd and the error between the speed V and the target path speed Vd is e which is defined by the following equation.

$$e = Vd - V \quad (5)$$

The following equation governing the dynamic characteristic of an error is obtained from equations (2) and (5):

$$de(t)/dt = dVd(t)/dt + aV(t) - bU(t) \quad (6)$$

If the control input U is determined to satisfy the following equation,

$$dVd(t)/dt + aV(t) - bU(t) = -Ae \cdot e(t) \quad (7)$$

The following equation is obtained from equations (6) and (7).

$$de(t)/dt = -Ae \cdot e(t) \quad Ae > 0 \quad (8)$$

Accordingly, the dynamic characteristic of a given error can be defined by Ae.

Finding the control input U from equation (7), the following equation is obtained.

$$U = b^{-1}(dVd/dt + aV + Ae \cdot e) \quad (9)$$

But unknown variables a and b are included in the above equation, so that the control input U cannot be determined as it is. Therefore, the unknown terms are estimated.

From equation (2), aV is as follows:

$$aV = -dV/dt + bU \quad (10)$$

Supposing that L is a slight time lag and aV = h, an assumption is made as follows:

$$h(t) \fallingdotseq h(t - L) \quad (11)$$

The unknown term aV, namely, h is estimated by the following equation based on equations (10) and (11).

$$hest(t) = -dV(t - L)/dt + bU(t - L) \quad (12)$$

Substituting the estimated value hest into equation (9), the control rule of time delay control about the constant speed cruising control is obtained by the following equation:

$$U(t) = U(t - L) + b^{-1} \{ -dV(t - L)/dt + dVd(t)/dt + Ae \cdot e \} \quad (13)$$

Since equation (13) for calculating the control input U includes unknown term b, the control input U(t) to the actuator cannot be determined as it is. Therefore, the estimation value best of b which stabilizes the control system is substituted into equation (14) to obtain the actual control input. That is, the following equation gives the control input.

$$U(t) = U(t - L) + best^{-1} \{ -dV(t - L)/dt + dVd(t)/dt + Ae \cdot e \} \quad (14)$$
$$best > 0$$

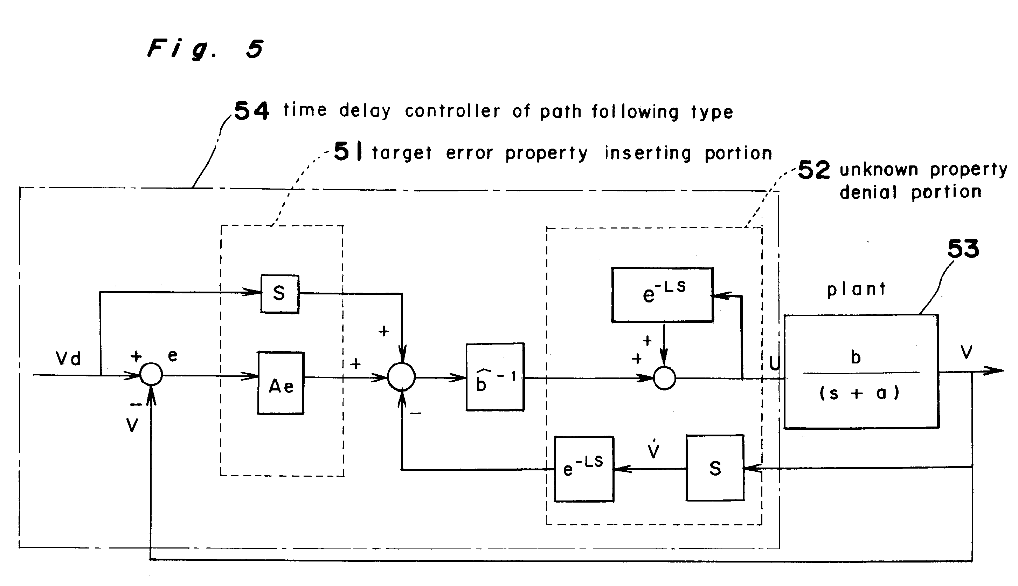

A block diagram shown in Fig. 5 represents the control rule in detail given by equation 14. When the control input U is given to an object 53 to be controlled, the speed V is outputted. The error convergence performance is guaranteed by a target error property inserting portion 51 based on the target path speed Vd and the deviation e between the target path speed Vd and the speed V, and an unknown property denial portion 52 estimates a nonlinear term according to the actual speed V and the control input U. Thus, a time delay controller 54 of trajectory following type is constituted and the deviation e becomes zero, so that the control input U to the object 53 is calculated so that a desired response waveform is obtained.

That is, $-dV(t-L)/dt$ and $U(t-L)$ are terms for denying unknown portion of the plant 53, and $dVd(t)/dt + Ae.e$ is an error dynamic property inserting term for a given target path.

The calculation of the estimated value best to stabilize the entire control system is described below. The following equation is obtained by Laplace-transforming equation (14):

$$best(1 - e^{-LS})U(S) = \{-(S^{-LS} + Ae)V(S) + (S + Ae)Vd(S)\} \quad (15)$$

The following equation is obtained by Laplace-transforming equation (2):

$$U(S) = b^{-1}(S + a)V(S) \quad (16)$$

The following equation is obtained from equations (15) and (16):

$$\{best\, b^{-1}(S + a)(1 - e^{-LS}) + Se^{-LS} + Ae\}V(S) = (S + Ae)Vd(S) \quad (17)$$

Pade approximation is applied to equation (17). That is, the following equation is substituted into equation (17).

$$e^{-LS} = (2 - LS)/(2 + LS) \quad (18)$$

$$\frac{V(S)}{Vd(S)} =$$

$$\frac{(2 + LS)(S + Ae)}{2\, bset\, b^{-1}(S + a)LS + S(2 - LS) + (2 + LS)Ae} \quad (19)$$

According, the condition for stabilizing the above equation is found by Routh-Hurwitz Criterion. First, supposing that the denominator of equation (19) is F(S), F(S) is as follows from equation (19):

$$F(S) = (2best\, b^{-1} - 1)LS^2 + \{(2a\, best\, b^{-1} + Ae)L + 2\}S + 2Ae = A_{\emptyset}S^2 + A_1S + A_2 \quad (20)$$

Since $A_1$ and $A_2$ are positive according to the parameter range of equations (3), (4), (8), and (14), the following equation is the necesarry and sufficient condition for stabilization.

$$A_{\emptyset} = (2\, best\, b^{-1} - 1)L > 0 \quad (21)$$

Accordingly, the condition best is given by the following equation:

$$best > b/2 \quad (22)$$

Accordingly, best must be more than a half of the real value of b. Equation (22) is expressed by the following equation in consideration of the parameter range of equation (4):

$$best > bmax/2 \quad (23)$$

A response which satisfies the error dynamic characteristic can be obtained by using the above estimated value and the control input U obtained from equation (14). The control input is calculated above by approximating the object supposing that the object is of one order function, but the object may be designed as being expressed in quadratic function or a higher order function.

The method for calculating the target path speed Vd is described below.

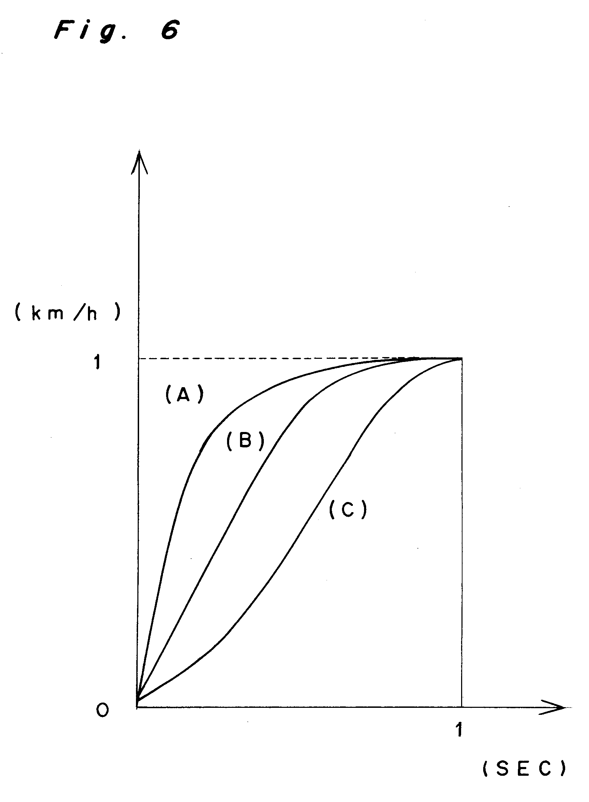

Fig. 6 is a graph of a target path in which the speed axis (ordinate) and time axis (abscissa) given by the target path setting means of the first embodiment are normalized. A driver selects one of normalized target path from speedy path (A), normal path (B), and slow path (C). That is, if a driver wants to carry out a resuming operation with an acceleration of a high response, a path speedy (A) is selected through the target path selecting means. If the driver wants to travel slowly, a path slow (C) is selected.

A target path speed which converges on the target path speed is calculated by the product of any one of the normalized target path (A), (B), and (C) and the initial speed deviation which is the absolute value of the deviation between the target speed Vset and the actual speed at the time of ON of the resuming switch.

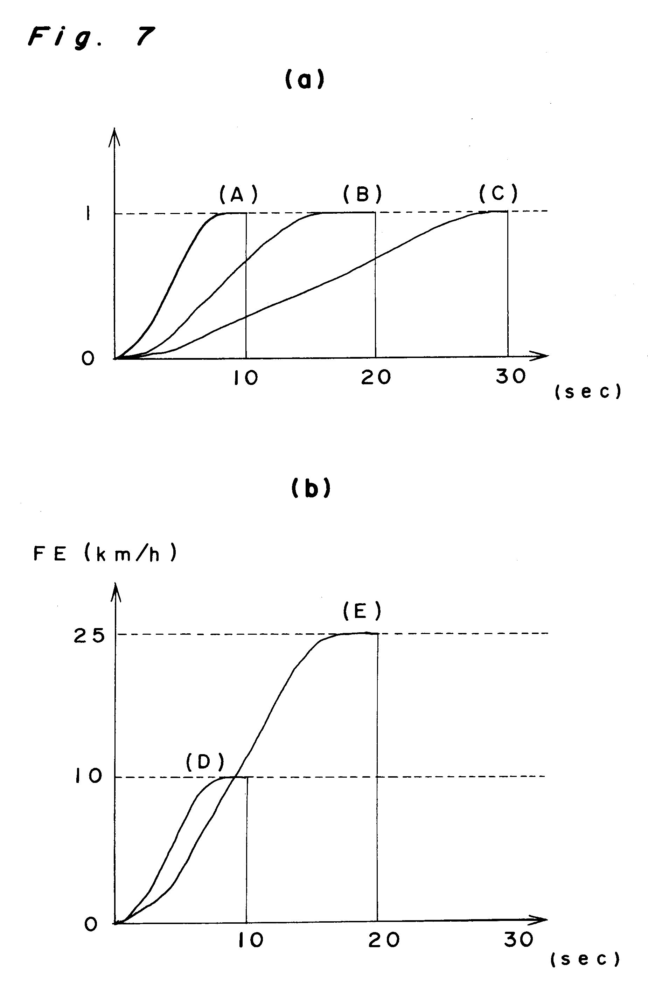

Fig. 7 is a graph showing a target path in which convergence period of time given by the target path setting means of the above-described second embodiment are different from each other and only speed axes (ordinate) are normalized. For example, if a speed ranges from 50km/h to 100km/h, the initial speed deviation ranges from 0 to 50km/h at the time of turn-on of the resuming switch. The initial speed deviation is divided into three target paths different from each other in convergence period of times, namely, A: 0 ~ 15km/h, B: 15 ~ 35km/h, and C: 35 ~ 50km/h. The convergence period of time of each actual speed on each target speed is set to, for example, 10 seconds, 20 seconds, and 30 seconds. Fig. 7(b) shows paths (D) and (E) of target path speeds for speed deviation of 10km/h and 25km/h at the time of turn-on of the resuming switch. For example, when the deviation between the target speed and the actual speed, namely, the initial speed deviation FE is 25km/h upon turn-on of the resuming switch, first, the normalized target path (B) in Fig. 7(a) is selected. The product of the target path (B) and initial speed deviation 25km/h is the path (E) shown in Fig. 7(b). The actual speed at the time of ON of the resuming switch is added to the path (E) as a bias. Thus, the target path speed is obtained. The target path speed is given for each control cycle.

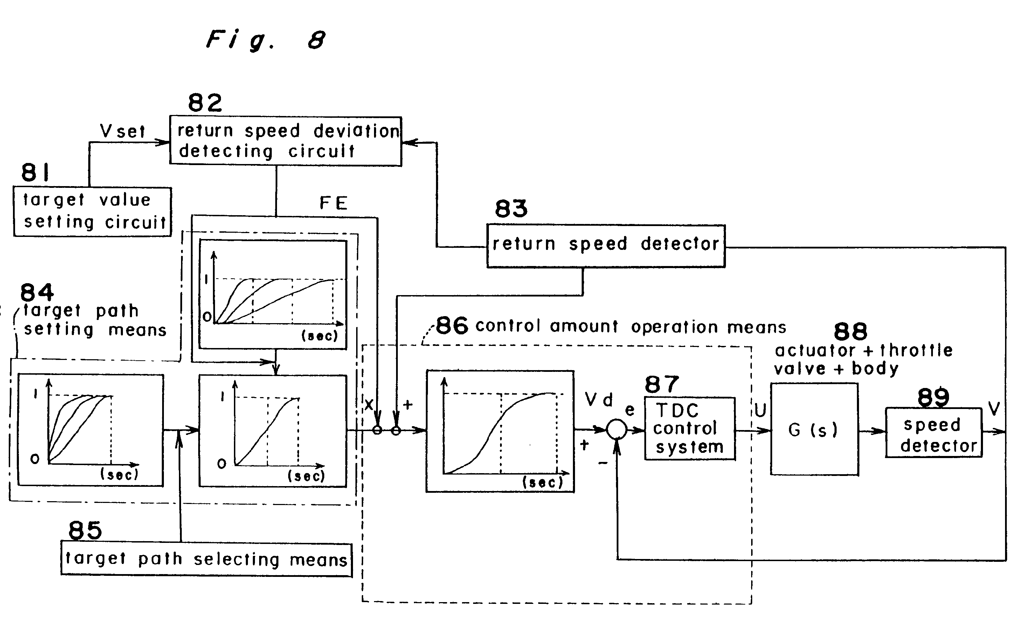

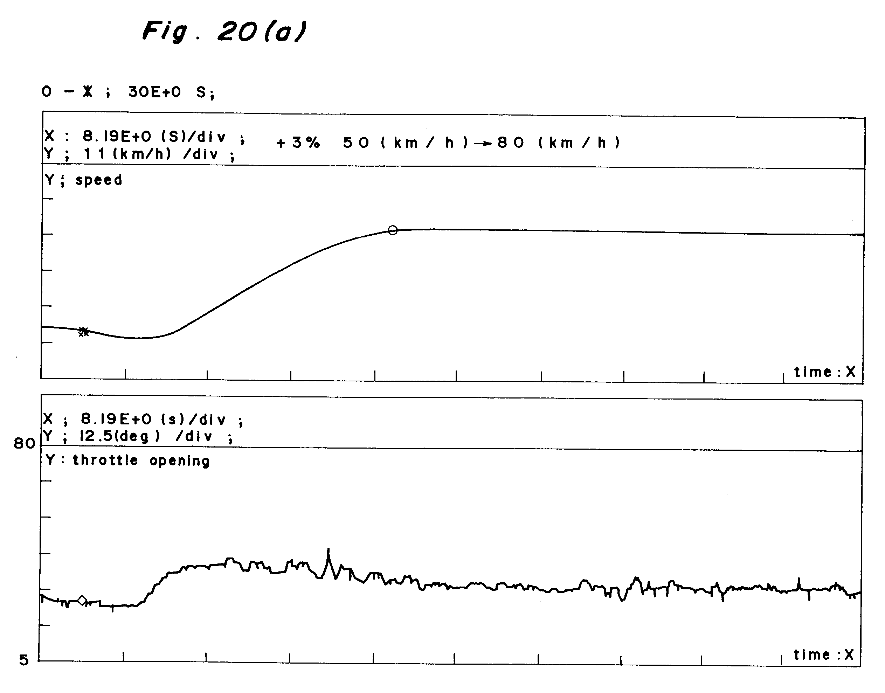

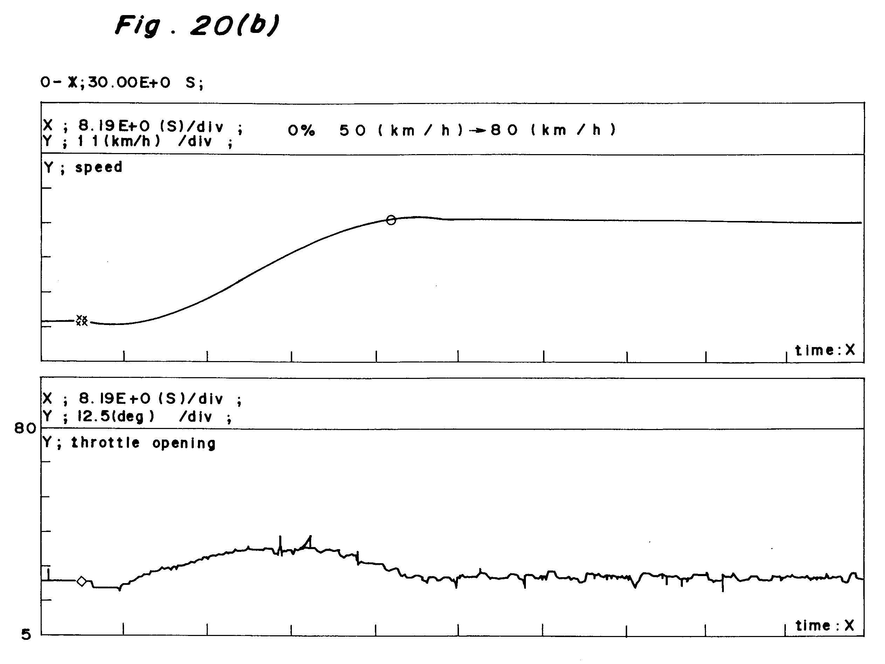

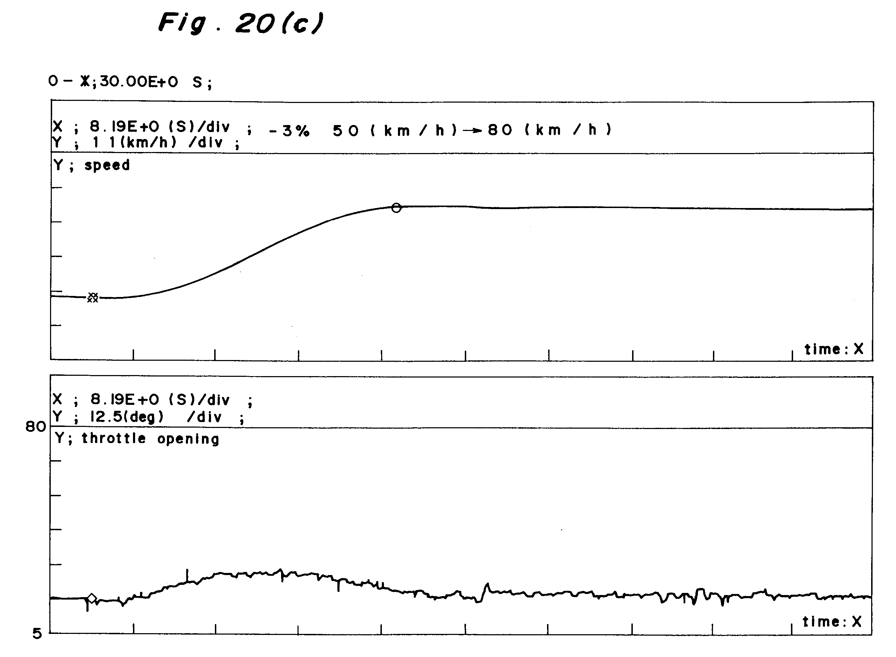

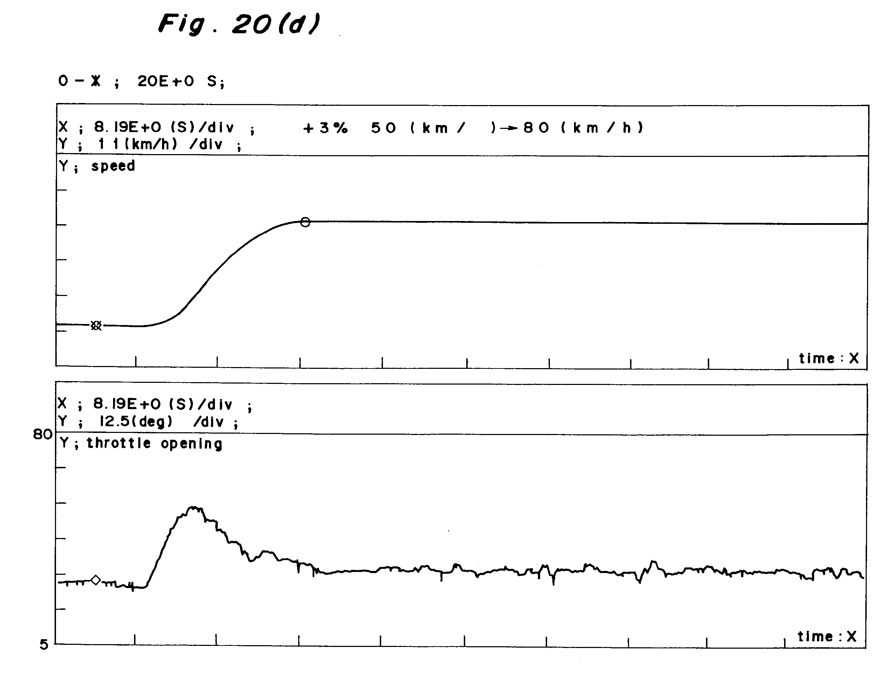

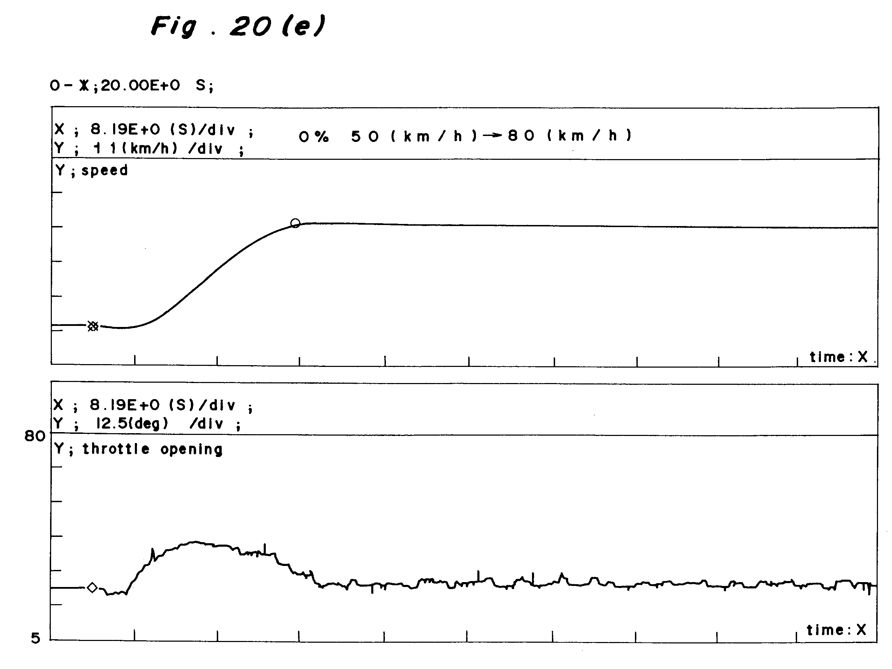

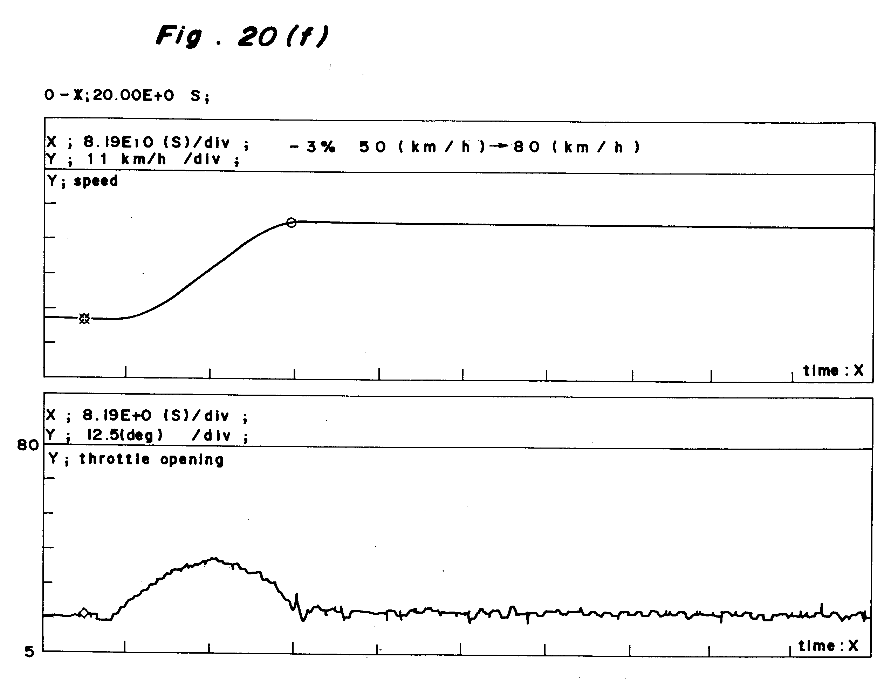

Fig. 8 is a block diagram showing an embodiment of the present invention. The method for calculating the target path speed Vd and the concept of the time delay control of trajectory following type which is an example of adaptable control are described with reference to Fig. 8. First, the method for calculating the target path speed is described below. Through a target path selecting means 85, a desired target path is selected from normalized paths given by a target path setting means 84. Then, a return speed deviation detecting means 82 calculates an initial speed deviation FE based on the target speed Vset set by a target value setting circuit 81 and an actual speed as a result of ON of the resuming switch obtained by a return speed detector 83. Then, the time axis of the normalized target path selected in advance, namely, convergence period of time is altered by a target path setting means 84 according to the value of the detected initial speed deviation FE. Thereafter, a control amount operation means 86 multiplies the value of the target path by the initial speed deviation FE. Then, the return speed detector 83 adds the value of the actual speed at the time of ON of the resuming switch to the product as the offset. Thus, the target path speed Vd is calculated. A TDC control system 87 makes zero the deviation between the target path speed Vd and the actual speed V detected by a speed detector 89 so as to calculate the operation amount U for converging the actual speed V on the target speed in a desired response waveform as the target path speed Vd. An object to be controlled is a plant 88 comprising an actuator, a throttle valve, and a body. Figs. 20(a) through 20(f) show an experimental result of the chassis travel of a turbo engine-equipped vehicle of 2000cc (205/6400 (PS/rpm)) under the control of time delay control of trajectory following type. The control input is given by the following discrete equation:

$$U(k) = U(k - 1) + best^{-1}\{ - (V(k) - V(k - 1)/L + (Vd(k) - Vd(k - 1)/ L + Ae \cdot e(k)\} \quad (24)$$

$$Vd(k) = (1 - cos(\pi * k/TAU)) * (Vset - V0)/2 \quad (25)$$

where best = 0.11808, Ae = 0.11574, sampling time L = 720msec, Vset is target speed, and VO is actual speed at ON of resuming switch. Locuses in which when TAU is 20, settling time is 20 seconds and when TAU is 30, settling time is 30 seconds are obtained. Figs. 20(a) through 20(f) show resuming operations in which speed ranges from 50km/h to 80km/h. Figs. 20(a) through (c) show experimental results of resuming operation at a gradient of +3%, 0%, and -3% when settling time is 30 seconds. Figs. 20(d) through (f) show experimental results of resuming operation at +3%, 0%, and -3% when settling time is 20 seconds. A desired response waveform can be obtained by thus selecting a target path. The control system is very robust for the change of road incline.

Next, the method for automatically amending a target path and the rule for automatically altering control gain are described below.

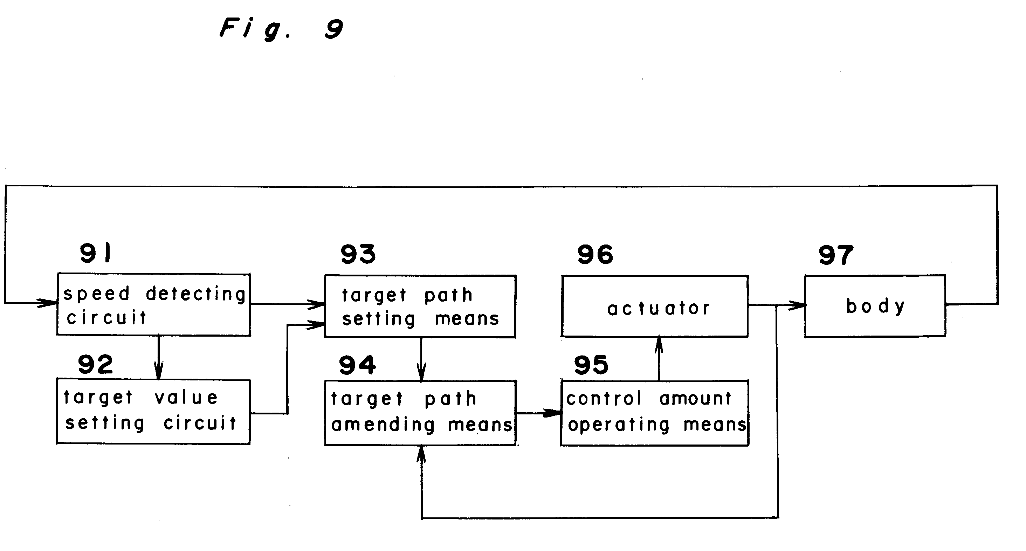

Fig. 9 is a construction conceptually showing a third embodiment of the present invention. A speed detecting circuit 91 reads the actual speed of a body 97. A target value setting circuit 92 sets, the actual speed initially set, as the target speed. A target path setting means 93 calculates a target path speed providing a reference path which converges the actual speed on the target speed in a desired response waveform. Based on the deviation between the actual speed and the target path speed, a control amount operation means 95 calculates a control amount to be outputted to an actuator 96 so that the deviation becomes zero. Based on the output value of the actuator 96 and the deviation, the target path speed provided by the target path setting means 93 is amended to a target path speed suitable for various kinds of vehicles and driving condition by a target path amending means 94. Using the amended target path speed, the control amount operation means 95 keeps controlling the constant speed cruising control.

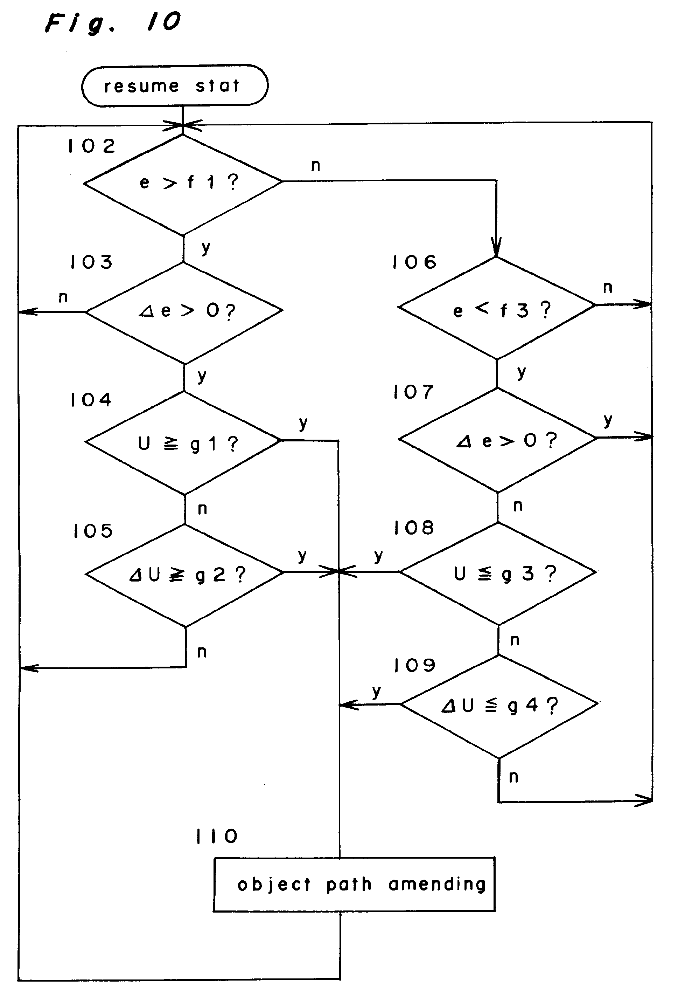

The concept of amending the target path speed Vd(t) is described below. The target path setting means 93 calculates the target path speed Vd(t) in time function. For example, the target path speed Vd(t) has a map for giving a normalized target path, and the map is multiplied by the difference between the target speed at the time of ON of the resuming switch and the actual speed. Thus, the target path speed for each sampling time is provided in time series. The target path speed may be calculated by providing an acceleration in convergence. All vehicles are not capable of following the target path speed Vd(t) depending on the kind of a vehicle or a driving condition such as the road incline. Therefore, in view of this fact, it is necessary to amend the target path speed to the target path speed which can be followed. Fig. 10 is a flowchart for amending the above-described target path speed. A control object expressed in linear function system of one output for one input under time delay control is considered.

$$G(s) = V(s)/U(s) = b/(s + a) \quad (26)$$

where s is Laplace operator, V is speed, U is input, a is unknown characteristic, b is unknown input distribution characteristic.

Referring to Fig. 10, e(t) is the error between the target path speed Vd(t) and the actual speed V(t), namely, e(t) = Vd(t) - V(t), and de(t)/dt(=Δe(t)) is a differentiated value of the error U(t) is a control input satisfying target deviation characteristic de(t)/dt = -k·e(t) (k is deviation feed-back coefficient) and calculated as follows:

$$U(t) = U(t - L) + \{ - dV(t - L)/dt + dV_d(t)/dt + k \cdot e(t)\}/best \quad (27)$$

where L is slight time, U(t - L) is input applied to the control object time L earlier, dV(t - L)/dt is the differentiated value of actual speed of the object detected a time L earlier, best is control input characteristic, and ΔU is the differentiated value of U(t) (ΔU = dU(t)/dt)

The operation of the flowchart shown in Fig. 10 is described below. After a resuming operation is started at step 101, an error e is compared with a set value f1 at step 102. If e > f1, it is decided at step 103 whether or not the differential value Δe is positive. If Δe is positive, it is decided at step 104 whether or not the control input U is greater than g1. The saturation value of the control input is used as the value of gl. If e > f1 at step 102, Δe > 0, and U ≧ g1, the target path is amended. If U is smaller than g1 at step 104, it is decided at step 105 whether the variation of the control input U is greater than g2. The value of g2 is, for example, the maximum speed in the actuator opening direction. If e > f1, Δe > 0, and ΔU ≧ g2, the target path is amended at step 110. If it is decided at step 102 that the error e is smaller than f1, the program goes to step 106 at which it is decided whether e is smaller than f3. If e < f3, it is decided at step 107 whether or not the differential value Δe is positive. If Δe < 0, it is decided at step 108 the control input U is greater than g3. The minimum value of the control input is used as the value of g3. If e < f3, Δe < 0, and U ≦ g3, the program goes to step 110 at which the target path is amended. If U > g3, it is decided at step 109 whether or not the variation ΔU is smaller than g4. The value of g4 is, for example, the maximum speed in the actuator closing direction. If e < f3, Δe < 0, and ΔU ≦ g4, the target path is amended at step 110. As described above, the target path is amended as follows:

(1) e > f1, Δe > 0, and U ≧ g1, then the target path is amended.

(2) e > f1, Δe > 0, and ΔU ≧ g2, then the target path is amended.

(3) e < f3, Δe < 0, and ΔU ≦ g3, then the target path is amended.

(4) e < f3, Δe < 0, and ΔU ≦ g4, then the target path is amended.

(5) in the case except of the above items (1) to (4), the target path is not amended.

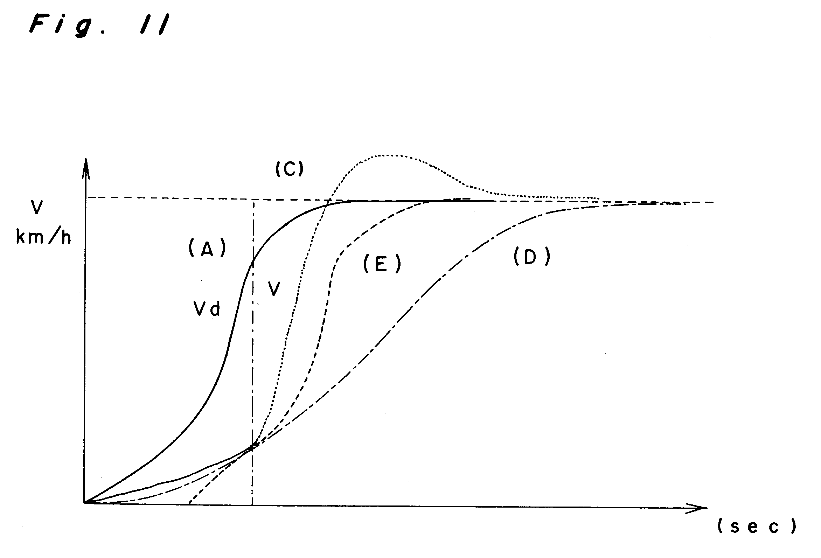

The above decision may be made by comparison of the error e. In addition, it is possible to use a higher order differentiated value of the deviation if an object is of higher order function under time delay control. The differential value of the error e is compared with zero above, but a dead zone may be provided as f3 < e < f1. A method for amending the target path performed at step 110 is described below with reference to Fig. 11. In Fig. 11, reference symbol (A) denotes a target path speed Vd given by the target path setting means 93 and (C) denotes the actual speed V upon turn-on of the resuming switch. If the target path speed Vd is used as it is, an overshoot occurs as shown by dotted line (C) and setting time may become long. Therefore, the target path speed (A) is vertically moved parallel so that it coincides with the speed at the time when the condition for amending the target path is satisfied as shown by the graph (B). By selecting the graph (B) as a new target path speed, a smooth acceleration without an overshoot can be obtained. The following method for amending the target path speed may also be carried out. That is, the path (A) is stretched in time axis direction as shown by one-dot chain line (D) so that the path (A) coincides with a speed V at the time when condition for amending the target path is satisfied. As another method for amending the target path speed, the path is expressed in trigonometric function and the cycle is elongated. Further, the input/output variable of the above-described rule (1) through (5) is expressed by a fuzzy variable, and the target path is expressed by trigonometric function with a cycle for the output variable of being the cycle found by direct method and indirect method.

An embodiment of an appropriate method for providing a target path in cruise control is described below.

In the target path setting means, a target path speed which provides a reference path converging an actual speed on a target speed at a desired acceleration α is calculated upon turn-on of the resuming switch.

The target path speed Vd(t) is obtained by providing the inclination of the target path in convergence, namely, a resuming acceleration α in advance and adding the increased amount of the resuming acceleration α to a speed at the time of turn-on of the resuming switch for each cycle. Some kinds of vehicles are incapable of following the target path speed Vd(t) even when it is fully opened. Therefore, it is necessary to amend the target path speed to be followed by those vehicles.

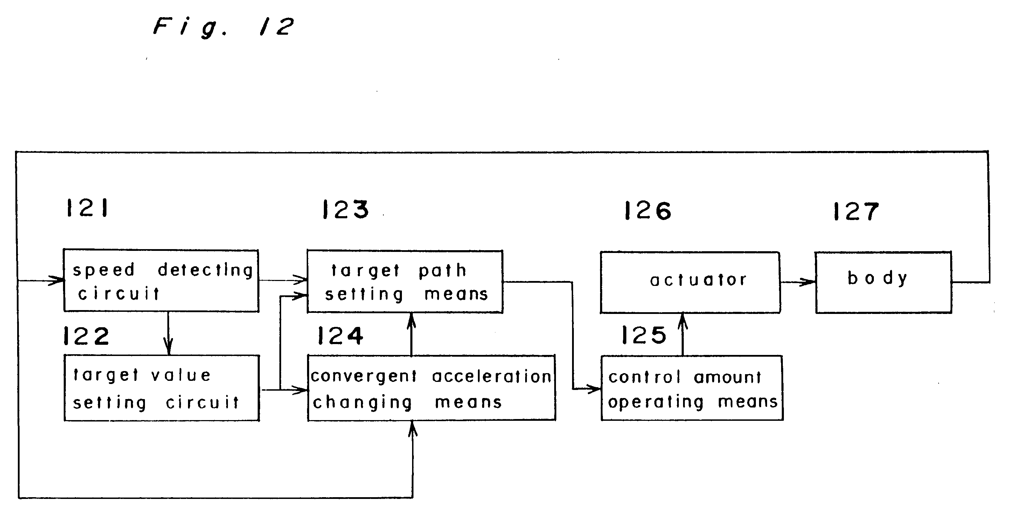

Fig. 12 is a construction conceptually showing a fourth embodiment of the present invention. A speed detecting circuit 121 detects the actual speed of a vehicle 127, and a target value setting circuit 122 sets, the actual speed set, as a target speed. Then, a target path setting means 123 calculates a target path speed providing a reference path which allows the convergence of the actual speed on the target speed in a desired response waveform at the time of ON of the resuming switch, for example, at a certain acceleration α at a return time. Based on the error between the actual speed and the target path speed, a control amount operation means 125 calculates a control amount to be outputted to an actuator 126 so that the error becomes zero. A convergence acceleration altering means 124 alters an acceleration in the convergence of the actual speed on the target speed to a small value when the error between the target path speed and the target speed becomes less than a certain value. Thus, the target path speed at the time of the termination of the resuming operation is amended to a smooth target path speed. Using the amended target path speed, the control amount operation means 125 makes a resuming control continuously. As a result, a resumption response can be accomplished without an overshoot in convergence.

The fundamental way of thinking for altering an acceleration α in convergence of a target path speed on a target speed is described below. A target path setting means 123 calculates the target path speed Vd(t) obtained by adding the gradient of the target path in convergence, namely, the increased amount of a return acceleration α provided beforehand to the speed at the time of ON of the resuming switch. When the error between the target path speed Vd(t) and the target speed becomes less than a certain value, the cycle in calculating the target path speed is made to be short or the acceleration α is made to be small at a certain rate. Thus, the variation amount at the time of the convergence of the target path speed on the target speed becomes small and the target path does not change rapidly. As a result, discontinuity does not occur and an overshoot or an undershoot at the time of the convergence of the actual speed on the target speed in response to the resuming operation can be prevented. Accordingly, the apparatus provides a favorable constant speed cruising without no discomfort in a resuming operation.

The cycle of the target path speed in convergence may be constant, and the acceleration α may be performed not at a constant rate, but at a large rate when the error is great and at a small rate as the actual speed converges.

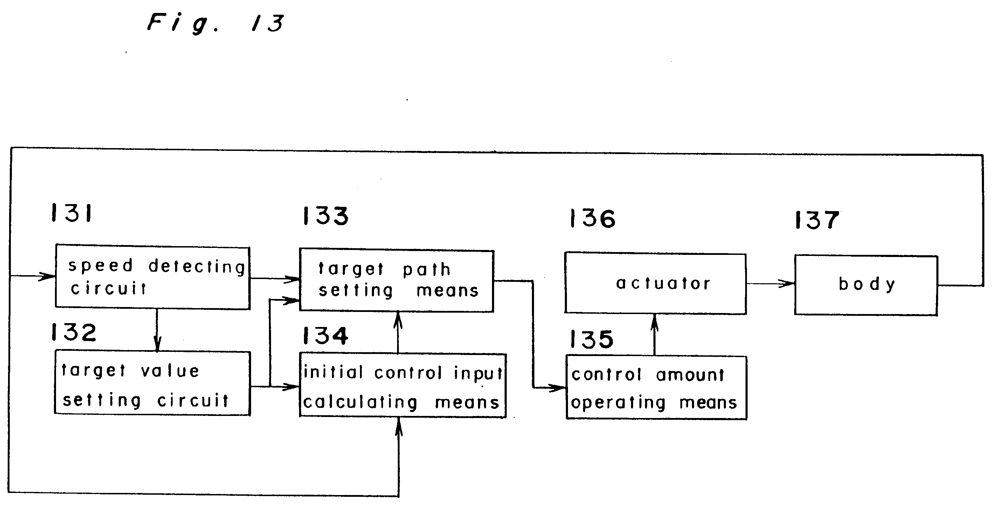

Fig. 13 is a construction conceptually showing a fifth embodiment of the present invention. A speed detecting circuit 131 detects the actual speed of a body 137, and a target value setting circuit 132 sets, the actual speed set, as the target speed. Then, a target path setting means 133 calculates a target path speed providing a reference path which allows the convergence of the actual speed on the target speed at a desired return acceleration α at the time of ON of the resuming switch. Based on the error between the actual speed and the target path speed, a control amount operation means 135 calculates a control amount to be outputted to an actuator 136 so that the error becomes zero. An initial target path altering means 134 alters the target path speed provided by the target path setting means 133 at the time of ON of the resuming switch to the actual speed value when the error becomes more than a certain value. Using the amended target path speed, the control amount operation means 135 makes a resuming control continuously. As a result, the influence of wasted time due to, for example, the loosening of a throttle wire can be removed and a smooth response control can be performed without wasteful accelerating operation.

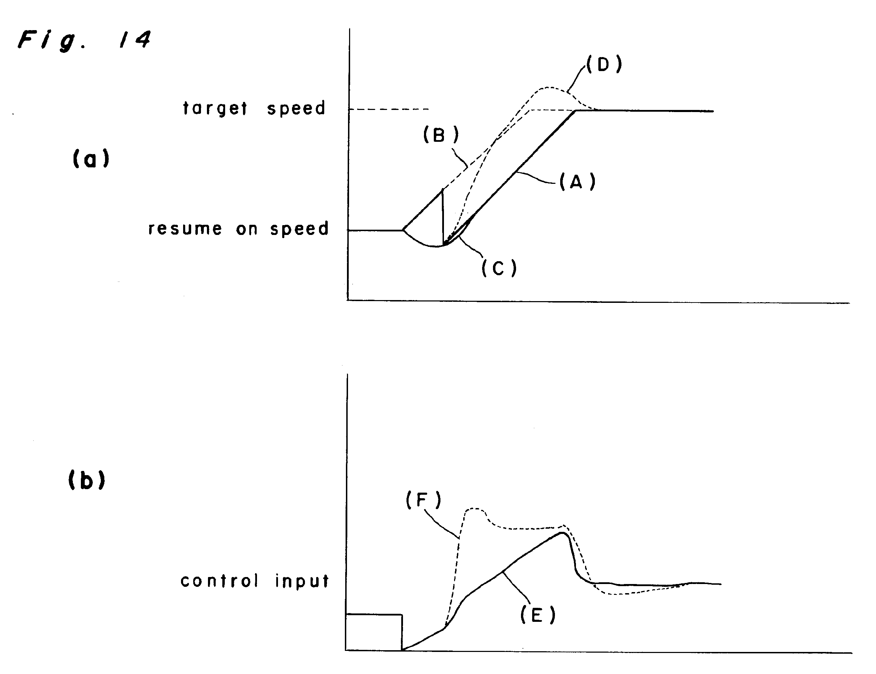

The fundamental way of thinking for altering a target path at the time of turn-on of the resuming switch is described with reference to Fig. 14. A line shown by a narrow broken line indicates a target path toward a target speed after the resuming switch is turned on. In this case, the initial target path is not altered. The response to the use of this target path speed is shown by a thick broken line D. The control input at this time is shown by a broken line F. When the target path is not changed, the opening amount of the throttle valve is excessive due to the operation for following the path. As a result, an overshoot may occur. Further, a rapid acceleration gives the driver discomfort. In order to prevent such an occurrence, after the resuming switch is turned on, the target path speed is reduced to the actual speed by the initial target path altering means if the actual speed is different from the target path speed more than a certain value. Thus, the vehicle speed follows the target path speed accurately as shown by (C) in Fig. 14 and the control input amount is expressed by a smooth response waveform as shown by a straight line (E).

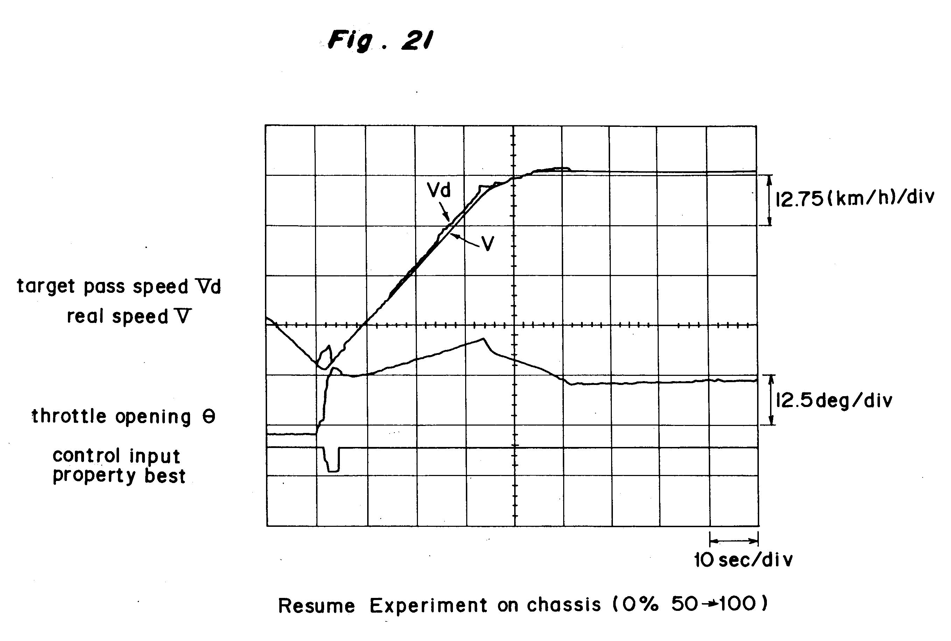

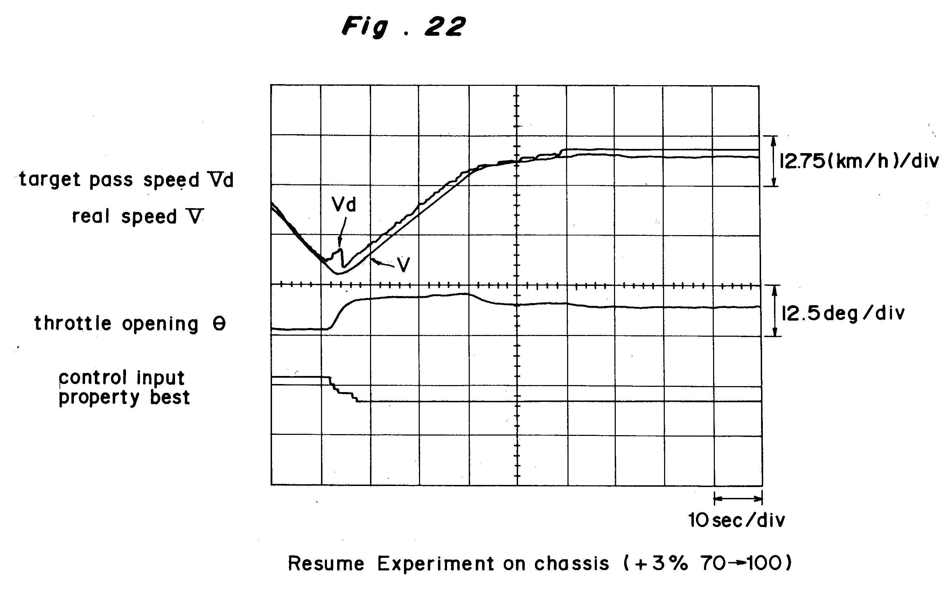

Figs. 21 and 22 show test results of vehicles to examine the target path altering means. The control equation is expressed by equation 27 in which L = 720msec, best = 0.11808, and Ae = 0.11574. The target path speed Vd is expressed by a gradient α in resuming time.

$$Vd = V0 + α * L \quad (28)$$

where α = 1.5km/h/sec or 1.0km/h/sec

In Figs. 21 and 22, the target path is expressed by an acceleration showing a slope at resuming time. Fig. 21 shows the experimental result in a resuming operation in which a chassis experiment conducted on a vehicle of a vehicle (125/5600 (PS/rpm)) not equipped with a turbo engine, road gradient is 0% and speed range is 50km/h～ 100km/h. A set speed was cancelled when the vehicle was travelling at a speed of 100km/h which was reduced with the throttle closed. When the speed was at 50km/h, the resuming switch is turned on. As shown in Fig. 21, the target path speed is provided at a certain slope after the resuming switch is turned on while the actual speed was decreasing with the error between the actual speed and the target path speed increasing. But the initial target path altering means allowed the target path speed to coincide with the actual speed so as to obtain a smooth acceleration without an abnormal opening of the throttle valve. Further, the convergence acceleration altering means allowed the actual speed to converge on the target path speed smoothly without an overshoot.

Fig. 22 shows an experimental result in a resuming operation in which an experiment was conducted on the same vehicle at a gradient of +3% and 70km/h ～ 100km/h. Similarly to Fig. 21, the target path was altered after the resumption switch is turned on and the target path speed coincided with the actual speed, but the error between target path speed and the actual speed increased again. Therefore, the target path amending means discriminated that the actual speed was incapable of following the target path speed by the acceleration for providing the target path, thus altering the acceleration. As a result, a favorable response to the resuming operation can be obtained.

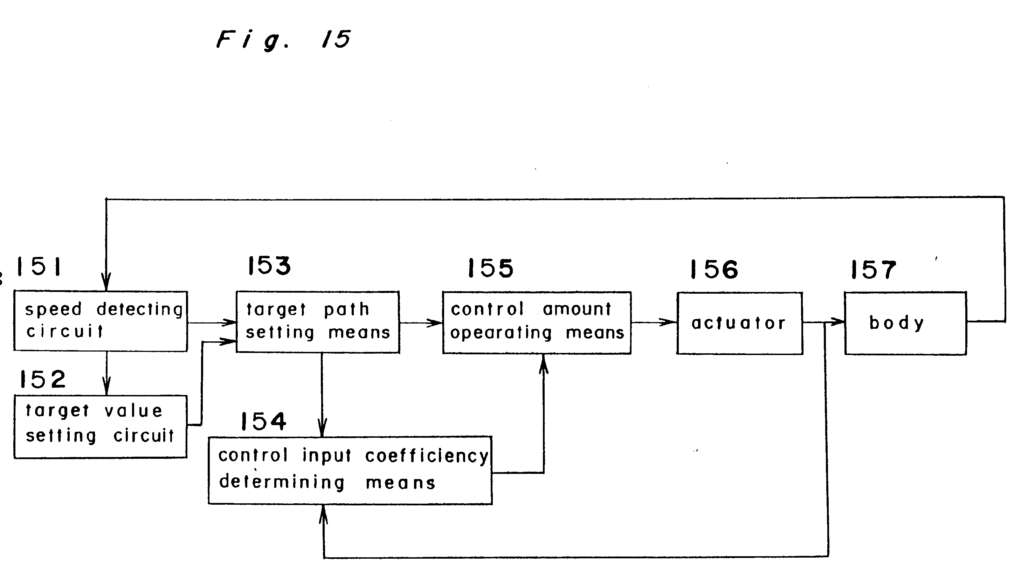

A rule for automatically altering a control gain is described below. Fig. 15 is a conceptual view showing a sixth embodiment of the present invention. A speed detecting circuit 151 reads the actual speed of a body 157, and a target value setting circuit 152 sets, the actual speed set, as a target speed. Then, a target path setting means 153 calculates a target path speed providing a reference path which allows the convergence of the actual speed on the target speed in a desired response waveform. Based on the error between the actual speed and the target path speed, a control amount operation means 155 calculates a control amount to be outputted to an actuator 156 so that the error becomes zero. Based on the output value of the actuator 156 and the error, the control input characteristic best of the control amount operation means 155 is altered to a control input characteristic according to each cruising condition by a control input coefficient determining means 154. Using the calculated control input characteristic best, the control amount operation means 155 keeps the constant speed travel control.

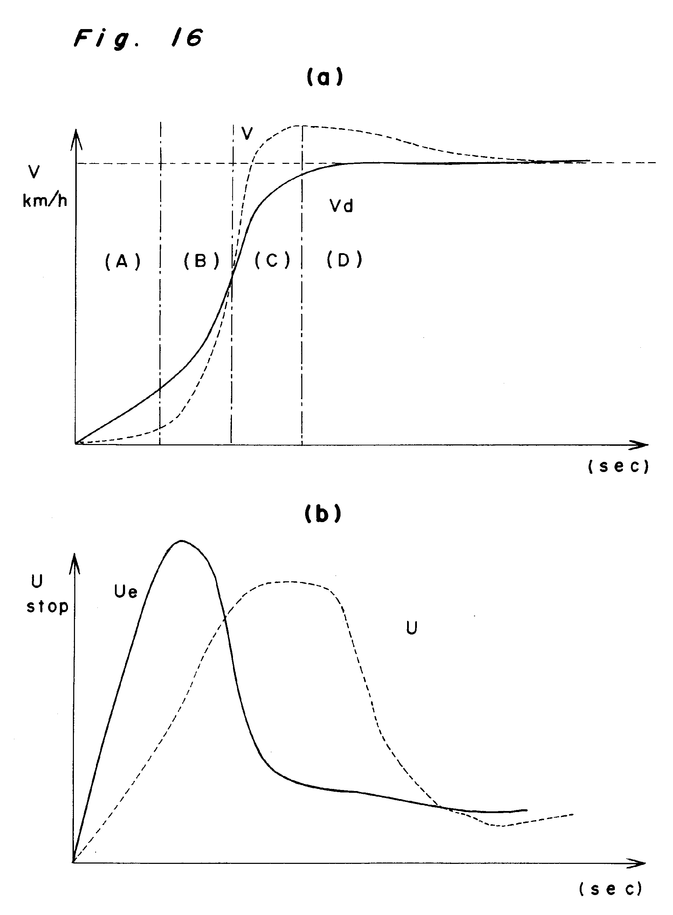

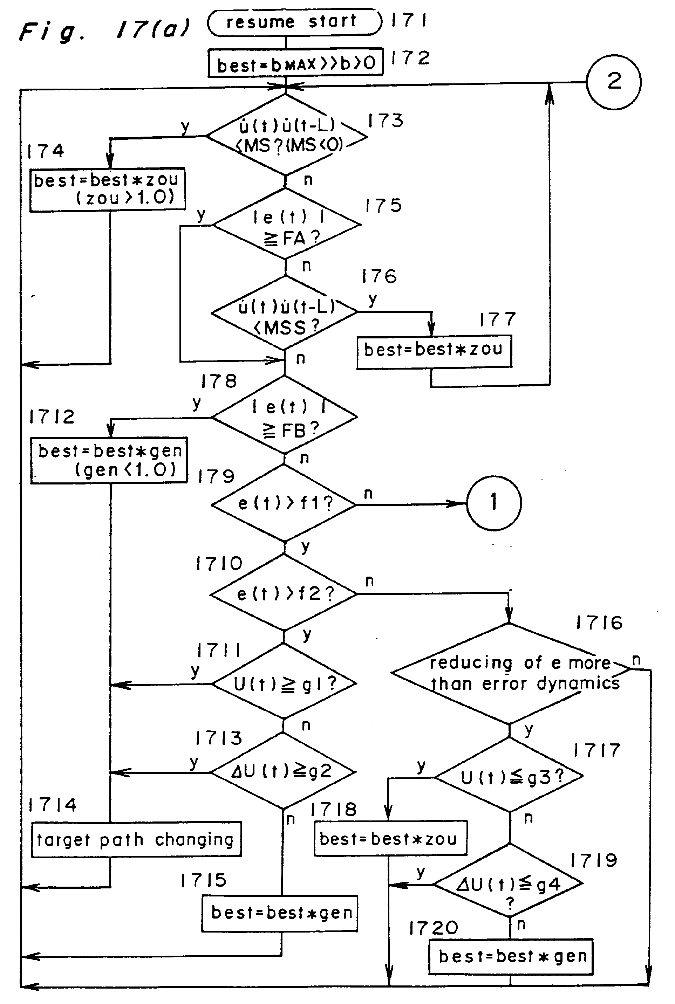

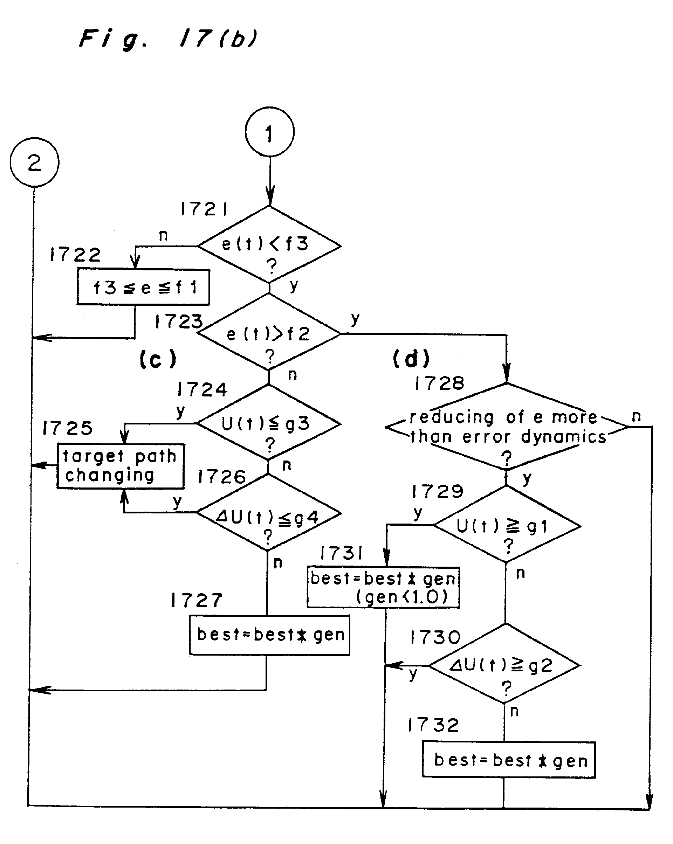

The following description is concerned with the fundamental way of thinking for altering the control input characteristic best for allowing the actual speed to converge on the target path speed favorably when the control input characteristic best and the input distribution characteristic b of an actual object are different from each other. In order to form a rule for determining the control input characteristic best by using the error between the actual speed and the target path speed, the differential value thereof, and the position/speed of the actuator, Fig. 16-a shows the target path speed Vd and speed V which is the output of the control object by the apparatus when the input characteristic best (control input characteristic) of the controller is greater than the actual input distribution characteristic b. Fig. 16-b shows the input to the actuator. In Fig. 16-b, Ue indicates an input when the input characteristic best = b (b > 0). As shown in Fig. 16-a, four conditions (A) through (D) are considered. The method for changing best is described with reference to Figs. 17-a and 17-b showing a flowchart. First, a resuming operation starts at step 172. At step 172, the control input characteristic best is set to $b_{MAX}$. It is decided at steps 173 through 177 whether or not a control input oscillates. If yes, the control input characteristic best is made to be large to move the system in a stable condition to prevent an oscillation. More specifically, it is decided at step 173 whether or not the product of the differential values (differential value of error is permitted) of two inputs an L time apart from each other is negative. If the product is negative, it is decided that the control input has oscillated a great deal, so that the control input characteristic best is made to be great at step 174 in order to accomplish a stabilization. Then, it is decided at step 175 whether or not the absolute value of the error is greater than a value FA. If no, it is decided at step 176 whether or not the control input oscillates in a small extent in a constant speed cruising. If yes, the control input characteristic best is made to be great at step 177. If no, at step 176, it is decided at step 178 whether or not the absolute value of the error is greater than a certain value FB. If yes, the control input characteristic best is made to be small at step 1712 and the target path suitable for the capability of each vehicle is selected at step 1714. If the condition is as shown by (A) of Fig. 16, i.e., if it is decided at step 179 that the deviation is greater than fl and at step 1710 that the differentiated value of the deviation is greater than f2, it is decided at steps 1711 and 1713 which of the following cases suits this decision. At steps 1714 and 1715, the control input characteristic best and the target path are altered. The condition of (A) is as follows:

[a-1]: Like an ascending slope, the input characteristic best of the controller is greater than the actual input distribution characteristic b, and consequently, the increased amount of the controller is small and an input is not obtained sufficiently.

[a-2]: Condition in which speed is not increased by engine capability although the actuator is fully opened.

[a-3]: A desired input cannot be obtained due to a delayed operation of the actuator.

The above is summarized as follows:

[a-1] $e(t)>f1$, $\Delta e(t)>f2$, $U(t)\leqq g1$, and $\Delta U(t)\leqq g2$, the control input characteristic best is decreased.

[a-2] $e(t)>f1$, $\Delta e(t)>f2$, $U(t)\geqq g1$, target path is altered.

[a-3] $e(t)>f1$, $\Delta e(t)>f2$, $U(t)\leqq g1$, and $\Delta U(t)\geqq g2$, target path is altered.

Similarly, condition (B) of Fig. 16 is as follows: That is, it is decided at step 1710 that the error is greater than f1 and it is decided at step 1710 that the differential value of the error is smaller than the set value f2, namely, negative. The following conditions are considered as condition (B):

[b-1]: best >b ; best is still greater than b in spite of the reduction of best and increase of input in (A) portion. Therefore, the input is not reduced to a sufficient degree. The error is reduced below the target error characteristic value.

[b-2]: Like a descending slope, the actual input distribution characteristic b is increased more than the value of the input characteristic used currently by the controller.

[b-3]: best is not altered except the above case.

The above decision is made at steps 1716, 1717, and 1719 and best is altered at steps 1718 and 1729. The above relationship is summarized as follows:

[b-1]: $e(t)>f1$, $\Delta e(t)<f2$, e is reduced below the target error characteristic, $U(t)\geqq g3$, and $\Delta U(t)\geqq g4$, best is reduced.

[b-2] : $e(t)>f1$, $\Delta e(t)<f2$, e is reduced below the target error characteristic, $U(t)\leqq g3$, best is increased.

[b-3]: $e(t)>f1$ and $\Delta e(t)<f2$, and except the above, best is not altered.

Similarly, condition (C) of Fig. 16 is as follows: That is, it is decided at step 1721 that the error is smaller than f3, namely, smaller than a negative value and it is decided at step 1723 that the differential value of the error is smaller than the set value f2, namely, negative. The following conditions are considered as condition (C):

[c-1]: best > b; best is still larger than b in spite of the reduction of best and increase of input in (B) portion. As a result, the target path is followed. But best is still greater than b, so that input is not reduced to a sufficient degree.

[c-2]: Like a descending slope, the actual input distribution characteristic b is increased more than the value of the input characteristic used currently by the controller.

[c-3]: best is not altered except the above case.

The above decision is made at steps 1724 and 1726 in which of (C) the current condition is and best is altered at steps 1725 and 1727. The above relationship is summarized as follows:

[c-1]: $e(t)<f3$, $\Delta e(t)<f2$, $U(t)\geqq g3$, $\Delta U(t)\geqq g4$, best is reduced.

[c-2]: $e(t)<f3$, $\Delta e(t)<f2$, $U(t)\leqq g3$, target path is altered.

[c-3]: $e(t)<f3$, $\Delta e(t)<f2$, $U(t)\geqq g3$, $\Delta U(t)\leqq g4$, target path is altered.

Similarly, condition (D) of Fig. 16 is as follows: That is, it is decided at step 1721 that the error is smaller than f3, namely, smaller than a certain negative value and it is decided at step 1723 that the differential value of the error is greater than the set value f2, namely, positive. The following conditions are considered as condition (C):

[d-1] : best > b, a sufficient reduction of input is not obtained, and the error is reduced below the target error characteristic.

[d-2]: Like an ascending slope, the actual input distribution characteristic b is reduced.

[d-3]: best is not altered except the above case.

It is decided at steps 1728 and 1729, and 1730 in which of (C) the current condition is and best is altered at steps 1731 and 1732. The above relationship is summarized as follows:

[d-1]: $e(t)<f3$, $\Delta e(t)>f2$, e is reduced below the target error characteristic, $U(t)\leqq g1$, and $\Delta U(t)\leqq g2$, best is reduced.

[d-2]: $e(t)<f3$, $\Delta e(t)>f2$, e is reduced below the target deviation characteristic, $U(t)\geqq g1$, best is reduced.

[d-3]: $e(t)<f3$, $\Delta e(t)>f2$, best is not altered. It is decided at the following equation that the error reduces below the target error charcteristic

$$|\,(1 - \exp(-K \cdot L)) \cdot e(t - L)\,| < |\,e(t - L) - e(t)\,| \quad (29)$$

In the above rule [a-1] to [d-1], if a control object by the apparatus comprises a system expressed by a higher order function, it is possible to generate a rule using a higher order differential value of the error.

Thus, best can be altered by using a rule conforming to an object. In Figs. 17(a) and 17(b), the alteration portion of best is set as follows: best = best∗zou (zou>1.0), best = best∗gen(gen<1.0), but coefficients zou and gen are given in the form of numerical values or in the following equations:

$$zou = 1 + |\,e\,| \cdot uk$$
$$gen = 1 - |\,e\,| \cdot uk \qquad (uk>0)$$
$$(uk \text{ is a constant value}) \quad (30)$$

It is to be noted that input/output variable in the rule is expressed in a fuzzy variable and best may be estimated by direct method or indirect method.

As described above, according to the present invention, the initial control input characteristic best is set as the maximum value $b_{MAX}$ of the initial control input characteristic b, a constant speed cruising control is made in advance by a target path normalized by the map, and an appropriate target path speed according to the capability of a vehicle can be found by the target path amending means by using the error or at least one higher order differential value of the error and the average speed of the actuator and position thereof. If the initial control input characteristic is different greatly from the input distribution characteristic of a vehicle equipped with the constant speed travel control apparatus, the control input characteristic is altered by the control input coefficient determining means by using the error or at least one higher order differential value of the error and the average speed of the actuator and position thereof, and the control input is calculated by the control amount operation means by using the control input characteristic. Thus, the converging performance for converging the actual speed on the target speed can be made to be constant and the actual speed stably follows the target path without being affected by the change of a vehicle dynamic character which occurs due to, for example, the fluctuation of a road load.

The apparatus has a similar effect for an object, of one input-one output expressed by a higher order function, which is under the time delay control. The control amount operation means may be constructed with a digital circuit. In this case, a sampling cycle is lagged by time L or a multiple of the sampling cycle by an integer is set as time L. Thus, the apparatus has an effect similar to the above-described effect. If a differential value of a speed cannot be detected, the speed difference for time L may be used.

The method for reducing the variation range of best and calculating an appropriate initial control input amount are described below with reference to figures.

First, the system construction and the construction of the control system are described.

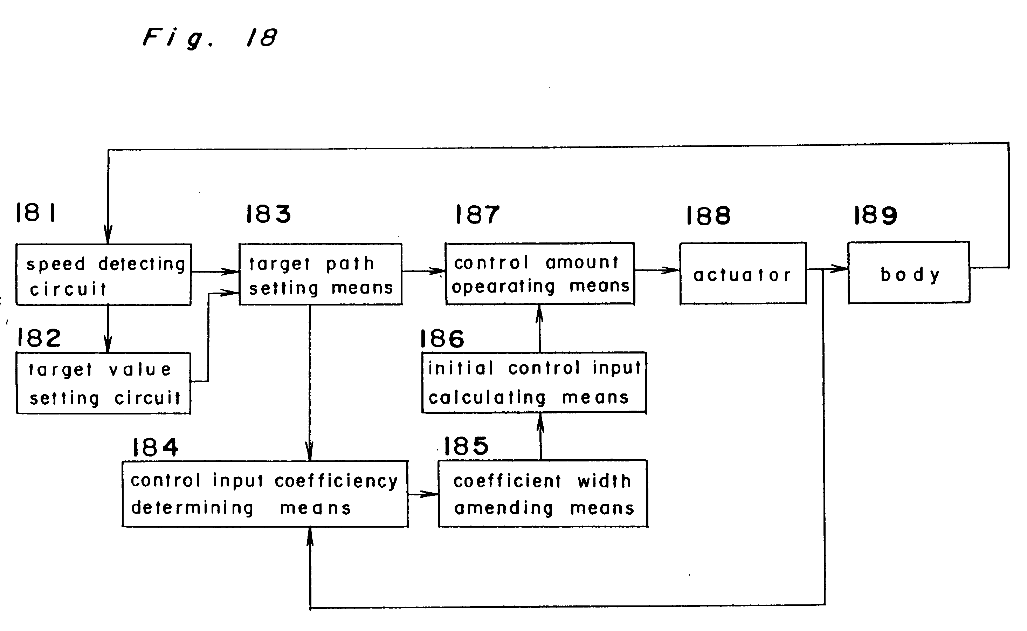

Fig. 18 is a construction view showing a seventh embodiment of the present invention conceptually. A speed detecting circuit 181 reads the actual speed of a body 189, and a target value setting circuit 182 sets, the actual speed set, as a target speed. Then, a target path setting means 183 calculates a target path speed providing a reference path which allows the convergence of the actual speed on the target speed in a desired response characteristic, namely, at a certain acceleration $\alpha$ in a resuming time. the target speed is set as the target path speed at the initial setting. At the time of turn on of the set switch, based on the error between the actual speed and the target path speed, a control amount operation means 187 calculates a control amount to be outputted to an actuator 188 so that the error becomes zero. Based on the output value of the actuator 188 and the error, the control input characteristic best of the control amount operation means 187 is altered to a control input characteristic according to each cruising condition by a control input coefficient determining means 184. Using the calculated control input characteristic best, the control amount operation means 187 keeps the constant speed travel control. A coefficient range amending means 185 observes the condition of the change of the calculated control input characteristic best, thus determining the value of a subsequent initial control input characteristic best, namely, the upper limit value of the fluctuation range of the initial control input characteristic best and the minimum value of the control input characteristic best, namely, the lower limit value of the fluctuation range of the control input characteristic. An initial target opening amount of the throttle valve according to kind of vehicle or the road situation can be obtained by the initial control input calculating means 186 which calculates the initial control input amount $U(O)$ in the initial setting or resuming operation by using best0.

The fundamental way of thinking for determining the fluctuation range of the control input characteristic for each vehicle, namely the upper and lower limit values is described below. First, during a constant speed cruising, the control input coefficient determining means alters the control input characteristic best according to a cruising condition. The initial value of the control input characteristic best at the start of the initial cruise, namely, the upper limit value best0 of the fluctuation range is set to the maximum value $b_{MAX}$ of the input distribution characteristic b of all vehicles equipped with the apparatus for safety because it is difficult to clarify the kind of vehicle.

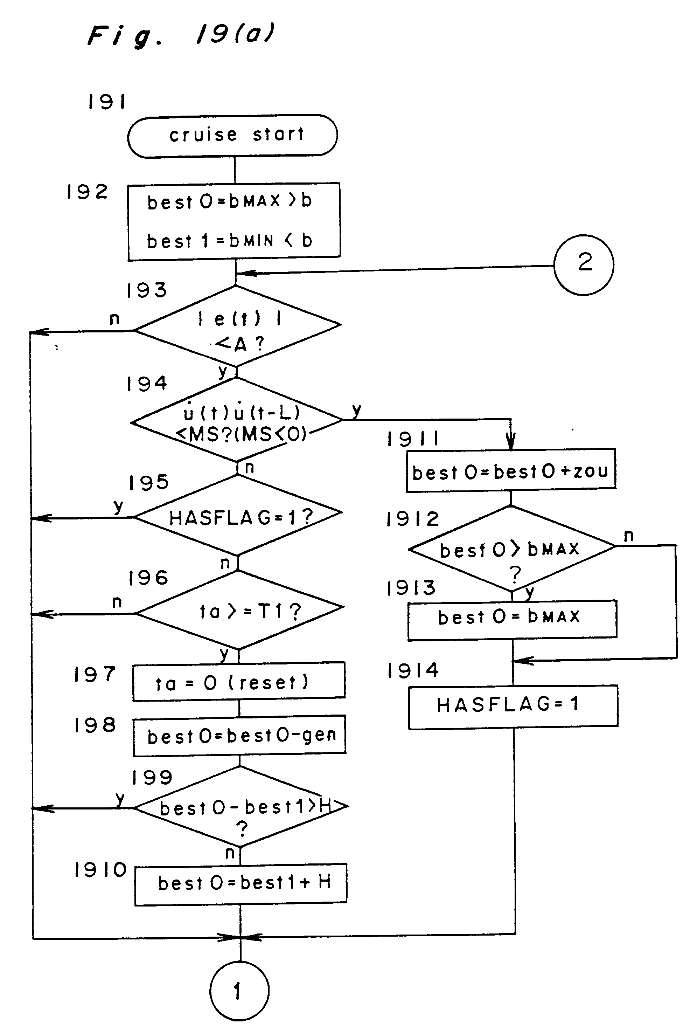

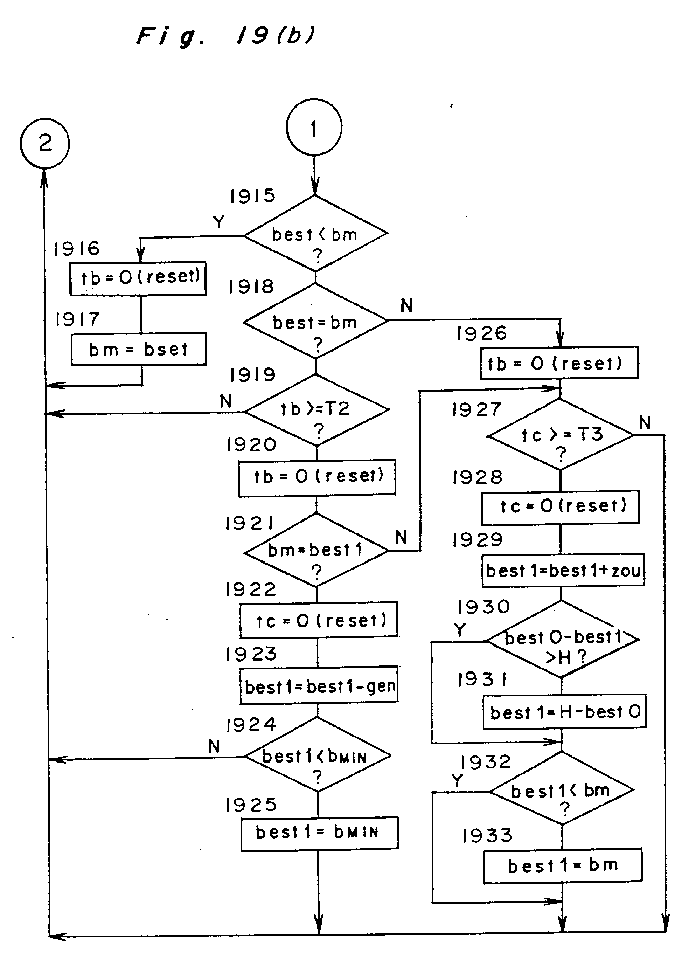

Figs. 19(a) and 19(b) show flowcharts for the coefficient range amending means to update the upper limit value best0 and the lower limit value best1.

At step 191, a switch for a cruise operation starts. As a result, a constant speed cruising control starts. At step 192, the upper limit value best0 and the lower limit value best1 are set to $b_{MAX}$ and $b_{MIN}$, respectively. At steps 193 through step 1914, the upper limit value best0 is updated. The lower limit value best1 is updated at step 1915 through 1933. The control input coefficient determining means is always updating best. It is decided at step 193 whether or not the vehicle is cruising at a constant speed, namely, whether or not the absolute value of the error is smaller than a certain value A. If yes, it is decided at step 194 whether or not the control input oscillates. If no, it is decided at step 195 whether or not the control input has oscillated. If no, the program goes to step 197 when the period of time of a stable cruising exceeds a certain set time T1, namely, when a counted value ta exceeds T1. At step 197, ta is cleared and the upper limit value best0 is reduced by a certain value gen at step 198. At steps 199 and 1910, the fluctuation range of the control input characteristic best is adjusted to become more than a certain value H. If it is decided at step 194 that the control input has oscillated, the upper limit value best0 is increased by a certain value zou at step 1911 and best0 is adjusted not to exceed $b_{MAX}$ at steps 1912 and 1913. A flag for deciding whether or not an oscillation has occurred is set to "1" at step 1914. It is prevented at step 195 that best does not become smaller than best0.

The method for altering the lower limit value best1 is described below with reference to Fig. 19(b). It is decided at step 1915 whether or not the updated control input characteristic best is smaller than the minimum value bm of previous times. If yes, the counter tb is reset to "0" at step 1916 and the minimum value bm is updated at step 1917. It is decided at step 1918 whether or not the current best is equal to the minimum value bm. If yes, it is decided at step 1919 whether or not this condition exceeds a certain period of time T2 according to the value of the counter tb. If yes, the counter tb is reset to "0" at step 1920 and it is decided at step 1921 whether or not the minimum value bm is equal to the current lower limit value best 1. If yes, the counter tc is reset to "0" at step 1922 and the lower limit value best1 is reduced by the value gen at step 1923. At steps 1924 and 1925, the updated lower limit value is smaller than $b_{MIN}$. If no, at step 1918, the program goes to step 1926 at which the counter tb is reset to "0" and it is decided at step 1927 whether or not the condition in which the minimum value bm of bset is greater than the lower limit value best1 exceeds a certain period of time T3 according to the counter tc. If yes, the counter tc is reset to "0" at step 1928 and the lower limit value best1 is increased by the value zou at step 1929. At steps 1930 and 1931, the upper limit value and the lower limit value keep to have a certain width H and the updated lower limit value is prevented from exceeding the minimum value bm of best. According to the above operation, the upper limit value best0 and the lower limit value best1 are altered to an appropriate value, respectively and updated according to the kind of a vehicle or a travel condition while they maintain a value greater than the range H between the maximum value $b_{MAX}$ and the minimum value best1. The updated value is stored at a cancellation time or OFF of the main switch. Therefore, the initial control amount U(0) at a subsequent setting time or resuming time is calculated as follows by the initial control input calculating means by using the updated upper limit value best0.

$$U(0) = V * \alpha/best0 \quad (31)$$

where V is a speed at the time of ON of switch and (a) is a constant about a vehicle dynamic characteristic. A speed at the initial setting is a target speed and a speed in resuming operation brought about due to ON of the resumption switch is an actual speed.

As apparent from the above description, the initial control input characteristic can be obtained according to a vehicle by updating the initial control input characteristic best0 by the coefficient range amending means. Further, the initial control input amount upon turn-on of the resuming switch can be calculated. Therefore, the occurrence of an overshoot in resuming operation can be reduced. Thus, a constant speed travel control can be made with a high accuracy. A different value may be used for the increase and decrease of the upper and lower limit values. The upper and lower limit values may be found by performing a multiplication by a certain rate.

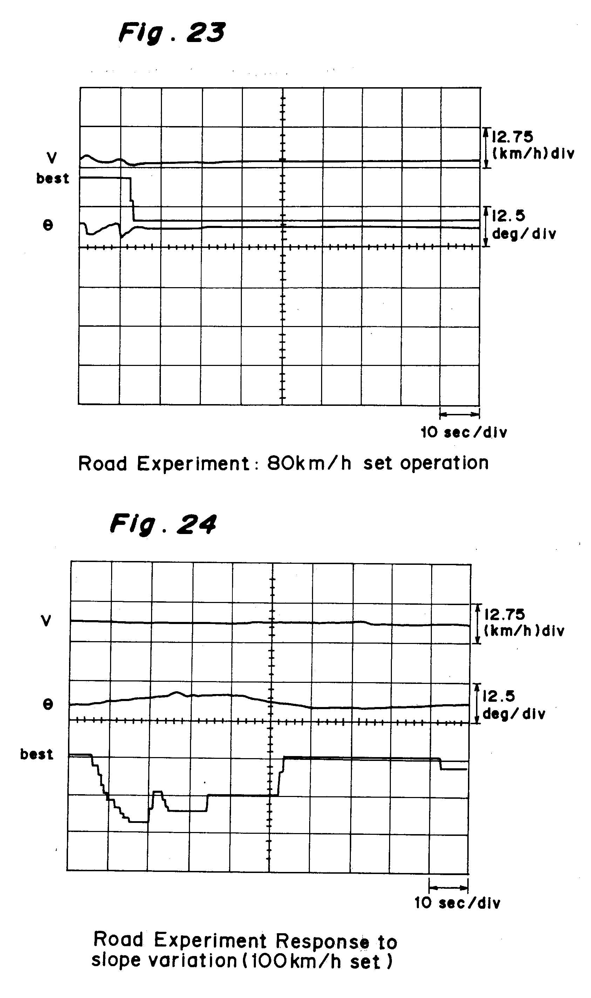

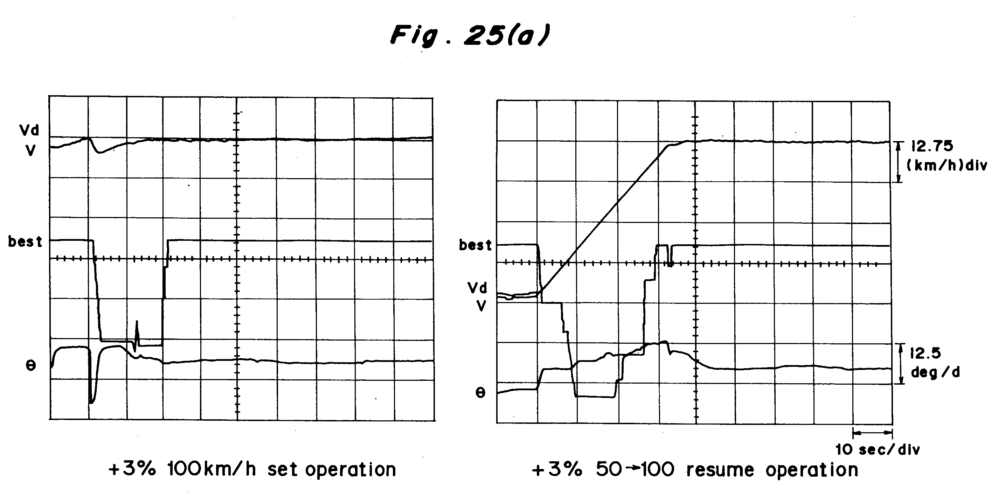

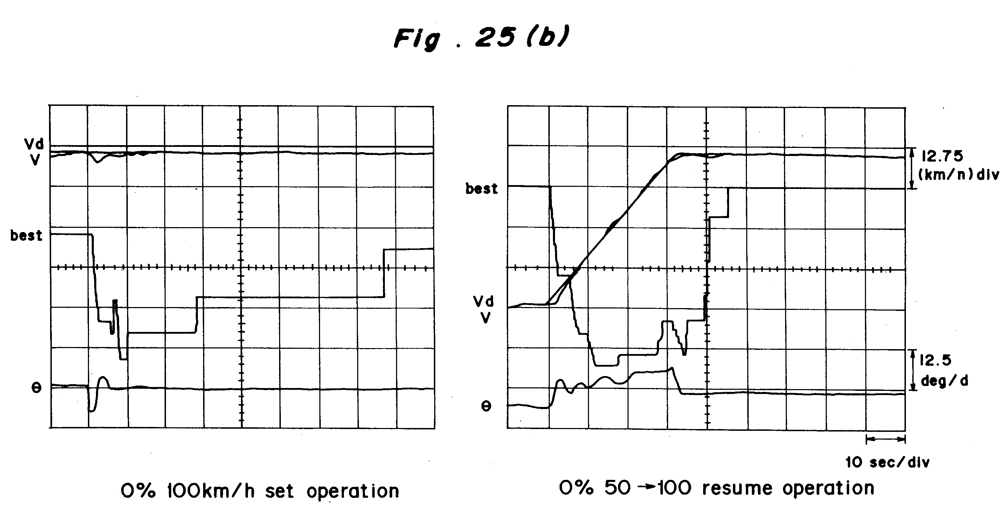

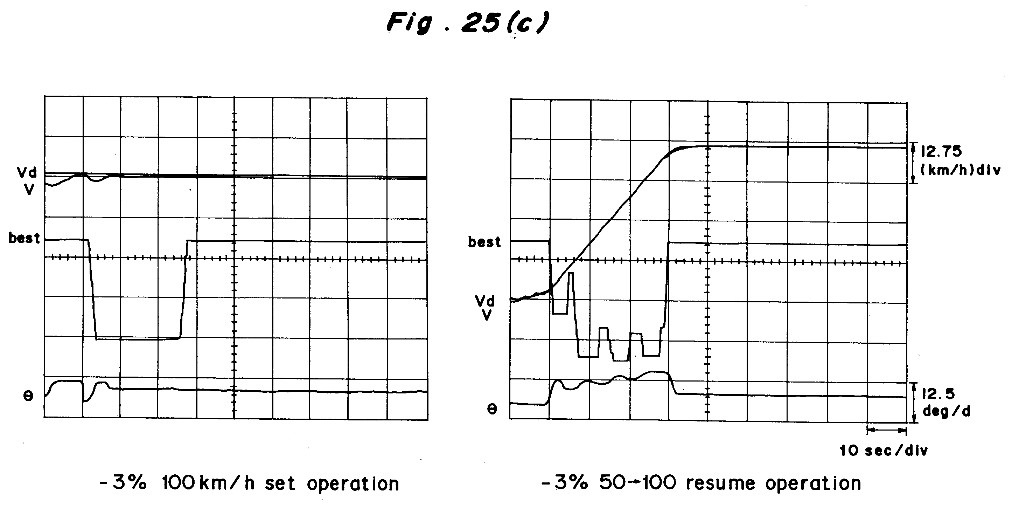

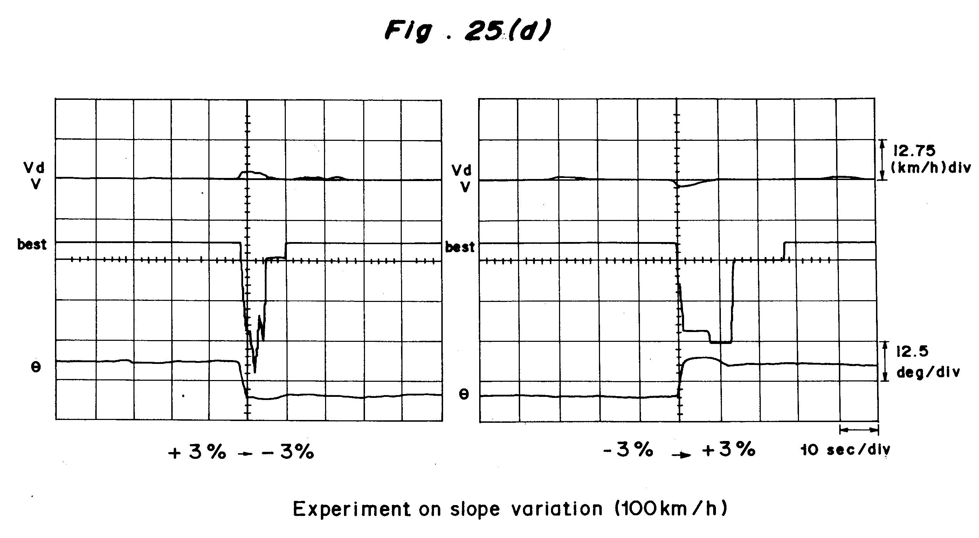

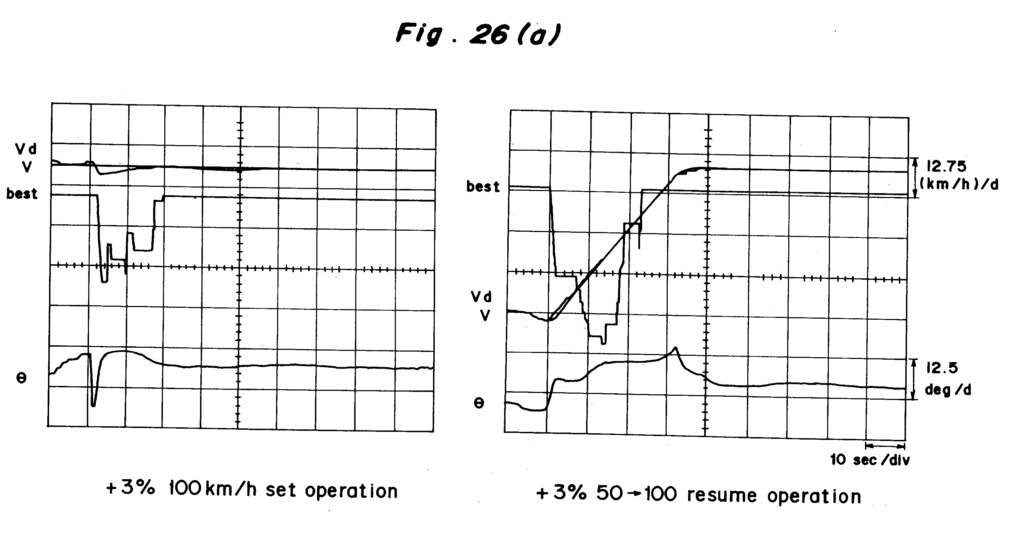

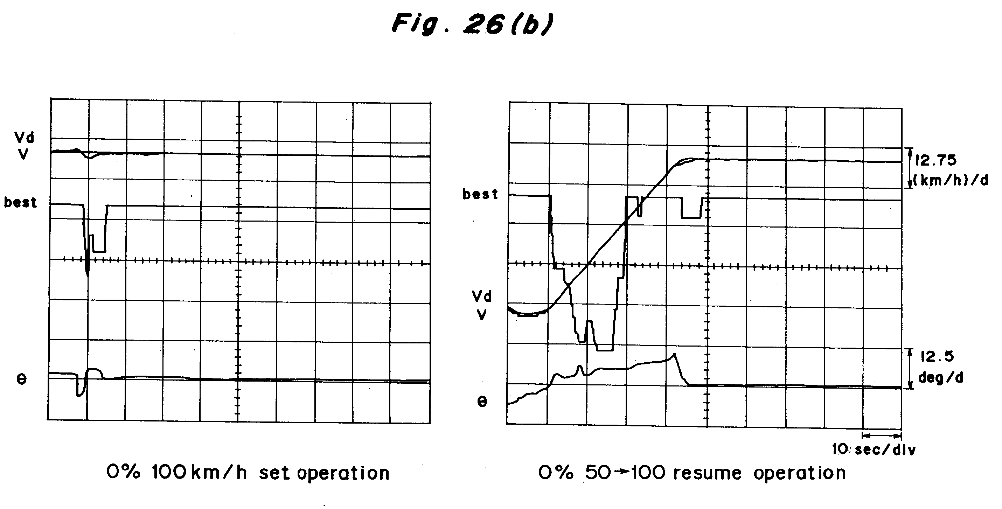

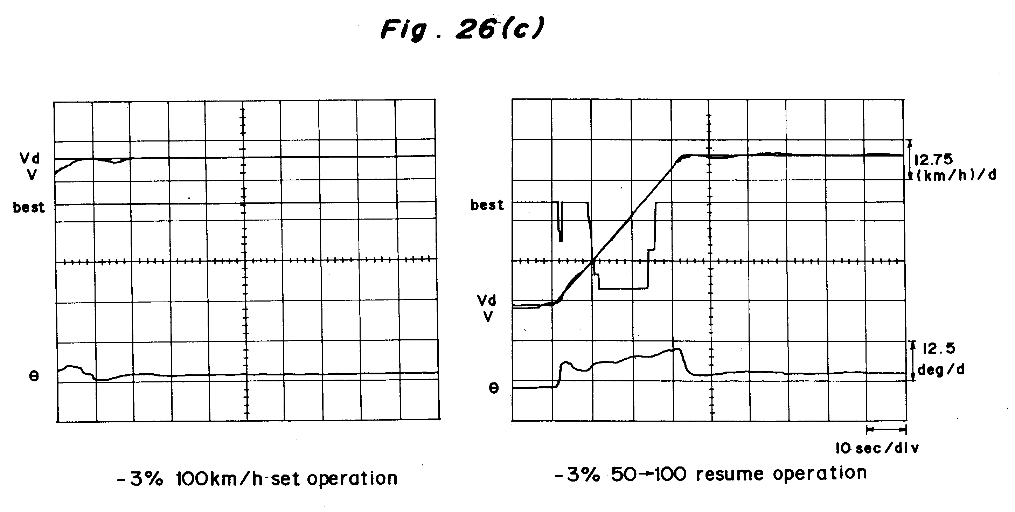

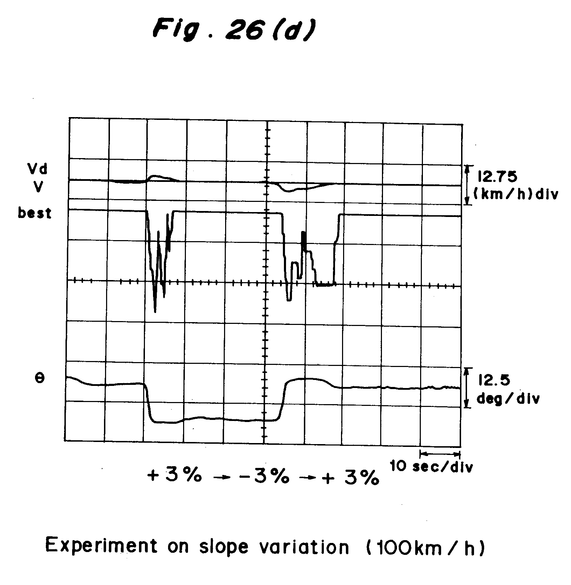

Figs. 23 and 24 show data of experimental result conducted on a vehicle of 2000cc equipped with a turbo engine (205/6400(PS/rpm)) by using the control input coefficient determining means. The control equation is given by equation (25) and the initial value of best0 is 0.2315. Fig. 23 shows a setting operation on a plane road at a speed of 80km/h. The control input characteristic best is reduced at the initial setting, but stopped at a certain value. Thus, a stable constant speed cruise control can be accomplished. Fig. 24 shows a result conducted on the same vehicle which traveled at a speed of 100km/h on an ascending or descending road. With the approach of the vehicle to an ascending slope, the estimated value best decreased a little and increased with the approach thereof to a descending slope. With the decrease and increase thereof, the control input to the actuator increased and decreased, but the vehicle speed was constant and the actual speed followed the target speed with a high accuracy. These experiments revealed the effectiveness of algorithm for altering the control input characteristic. Cruise experiments by way of algorithm provided with the method for automatically amending a target path and altering the control gain were conducted on two kinds of vehicles by the same software. The control equation is given by equation (24) and the target path speed is given by equation (28). L is 360msec and best0 is 0.2315. Figs. 25(a) through 25(d) and Figs. 26(a) through through 26(d) show experimental results on the chassis dynamometer of vehicles of 3000cc (280/6200(PS/rpm)) and 3000cc (180/6000(PS/rpm)). Figs. 25(a) and 26(a) show a setting operation of 100km/h at a gradient of 3% and a control in resuming operation of 50km/h to 100km/h. Figs. 25(b), 25(c), 26(b), and 26(c) show setting operations and resuming operations in the same condition as those of Figs. 25(a) and 26(a) at 0% and -3%, respectively. Figs. 25(d) and 26(d) show experimental result of speed response when a sudden gradient change occurred from +3% to -3% and from -3% to +3% during the cruising at a speed of 100km/h. It can be said from the above result that a control for allowing a vehicle to cruise stably and accurately can be made irrespective of kinds of vehicles and gradients. Further, vehicles reach the target speed in a desired response waveform without an overshoot. Thus, a robust control can be accomplished regardless of kind of vehicle and the change of road gradient.

## Claims

1. An auto-drive control apparatus for use in a vehicle comprising:
   a speed detect circuit (12, 22, 43, 89, 91, 121, 131, 151, 181) for detecting an actual speed V(t) of the vehicle (18, 28, 47, 97, 127, 137, 157, 189) at a time (t),
   an actuator (16, 26, 45, 88, 96, 126, 136, 156, 188) for adjusting the speed of the vehicle through a throttle valve (17, 27, 46, 88) of an engine,
   a target value set circuit (13, 23, 41, 81, 92, 122, 132, 152, 182) for setting up a target speed Vset,
   a control amount operation means (14, 24, 44, 86, 95, 125, 135, 155, 187) for calculating a control amount to be inputted into the actuator (16, 26, 45, 88, 96, 126, 136, 156, 188) for adjusting the speed of the vehicle (18, 28, 47, 97, 127, 137, 157, 189),
   characterized by
   a target path set means (15, 25, 42, 85, 94, 123, 133, 153, 183) for setting a target path speed Vd(t) as a function of time t,
   the control amount operation means (14, 24, 44, 86, 95, 125, 135, 155, 187) calculating the control amount to be inputted into the actuator (16, 26 ,45, 88, 96, 126, 136, 156, 188) through a control law of time delay control, the output V(t) from the speed detect circuit (12, 22, 43, 89, 91, 121, 131, 151, 181) being the target speed Vset along the target path to be given by the target path speed Vd(t).

2. An apparatus as defined in claim 1,
   characterized by a command circuit (11, 21) for outputting an auto-drive start signal, an auto-drive cancel signal and a resume signal for returning back to the speed of auto-driving of the previous time after releasing the present auto-driving through the auto-drive cancel signal,

the target value set circuit (13, 23) setting up the target speed through the auto-drive start signal of the command circuit (11, 21),

the control amount operation means (14, 24) securing the stability of control system in such a manner that the size of a control input characteristic best for deciding the value of control gain is a value more than a half of the value of a plant gain of model wherein an input is an input to the actuator (16, 26) while an output is a speed of the vehicle (18, 28), as a kind of adaptive control process for presuming an unknown term on the employment of a known term existed before a minute time L of the unknown term upon assuming the variation of the unknown term relating to the modeling error of plant and the disturbance from the outside being a constant for the minute time L, and

the target path set means (15, 25) setting paths to be reached for the actual speed to the target speed by means of the resume signal from the command circuit (11, 21), said paths including more than two paths to be set in advance of shapes, or setting times, different to the other and to be given by a function of time.

3. An apparatus as defined in claim 2, characterized by a target path select means (19) for selecting by a driver of the vehicle (18) a suitable one from the paths set by the target path set means (15), whereby the actual speed is converged to the target speed on following the path selected by the target path select means (19).

4. An apparatus as defined in claim 2, characterized by a return speed error detect means (29) for taking out a deviation between the target speed and the actual speed immediately after recognizing the resume signal from the command circuit (21), whereby the target path having a different converging time to the target speed of the target path set means is selected according to the deviation of the return speed error detect means (29).

5. An apparatus as defined in any of claims 2 - 4, characterized in that there are more than two target paths each different from the other of settling time being normalized with a speed axis in advance, and having a smooth response wave-form of resume time as a map, whereby the target path speed can be calculated according to the error between the target speed and actual speed of the resume switch being ON.

6. An apparatus as defined in any of claims 2 - 4, characterized in that there is an acceleration α of the time for converging to the target speed of resume time, thereby to calculate the target path speed to be settling time according to the speed error.

7. An apparatus as defined in claim 1, characterized by the control amount operation means operates on the employment of a value $U(t-L)$ before a minute time L of $U(t)$, a differential value of n order before a minute time L of the actual speed $V(t)$, a differential value of n order of the target path speed $Vd(t)$, a control input characteristic best, and a target error characteristic which provides a differential equation of n order having the differential values multiplied by the respective error feedback coefficients ki ($> 0$, $i = n-1$ to 0) of an error $e(t)$ between the target path speed $Vd(t)$ and the output $V(t)$ of the speed detect circuit, an error and the target error characteristic, and, in the case of the value of control input characteristic best employed at the time of control gain calculation being a value more than at least of half times of the maximum value of plant gain.

8. An apparatus as defined in claim 7, characterized by a target path amend means (94) for finding a new target path speed $Vd(t)$ on the employment of at least one path amend rule for giving new target path speed $Vd(t)$ upon evaluating the error between the target path speed and actual speed, or at least one of differential values up to the n order of the error, and the average speed and position of the actuator (96).

9. An apparatus as defined in claim 8, wherein in the path amend rule of the target path amend means (94), at least one of the error or the differential values of the error being inputted variable factors is compared with a set value, and the average speed and position of the actuator (96) are compared with set values, so that in consideration of relationship with the respective set values the target path speed $Vd(t)$ of output variable factors is given by a real number value, a calculation of linear or non-linear functions employing at least one of the error or the differential value of the error, or employing a variable number decide rule expressing the input and output variable factors with fuzzy variable numbers.

10. An apparatus as defined in claim 8 or 9, wherein the target path set means (93) includes converged acceleration change means for changing the accelaration α so as to converge smoothly the target path to the target speed when the error between the target speed and actual speed is less than a certain set value, in the case of the target path speed $Vd(t)$ being a speed on a straight line to be given by an acceleration α.

11. An apparatus as defined in claim 10, wherein the converged acceleration change means is adapted to reduce the acceleration α when the error between the actual speed and the target speed of the resume time becomes smaller than a certain set value.

12. An apparatus as defined in claim 8 or 9, wherein the target path set means (93) includes an initial target path change means for finding a new target path speed upon shifting in parallel the target path speed so as to coincide with the actual speed of the time, when the error e(t) having been measured from the time of resume switch ON becomes larger than a certain set value.

13. An apparatus as defined in claim 7, characterized by a control input coefficient decide means (154) for finding the control input characteristic best on the employment of more than one coefficient decide rules upon estimating the error between the target path speed and actual speed, or at least one of differential values of the error up to the n order, and the average speed and position of the actuator (156).

14. An apparatus as defined in claim 13, wherein in the coefficient decide rule of the control input coefficient decide means (154), at least one of the error or the differential value of the error being inputted variable factors is compared with a set value, and the average speed and position of the actuator (156) are compared with set values, so that in consideration of relationship with the respective set values the control input characteristic best is given by a real number value, a calculation of linear or non-linear functions emplyoing at least one of the error or the differential value of the error, or employing a variable number decide rule expressing the input and output variable factors with fuzzy variable numbers.

15. An apparatus as defined in claim 7, characterized by a control input coefficient decide means (184) for calculating the control input characteristic best on the employment of at least one of the coefficient rules upon estimating the error e(t), or at least one of differential values at n order of the deviation e(t), and the average moving speed and position of the actuator (188), a coefficient width amend means (185) for changing both of the value of initial control input characteristic best0 being the maximum value of control input characteristic, and the minimum value best1 of control input characteristic according to the changing condition of the calculated control input characteristic best to restrict the changing width of control input characteristic best, and an initial control input calculate means (186) for calculating an initial control input amount U(0) at time of set and resume on the employment of the value best0.

16. An apparatus as defined in claim 15, wherein in the initial control input calculate means, an initial control input U(0) is given by the value of V0∗a/best0 on the employment of initial control input characteristic best0 the speed V0 at the time of set and resume and the constant value "a".

17. An apparatus as defined in claim 15, wherein in the coefficient width amend means, the intial values of maximum best0 and minimum best1 of the control input characteristic are respectively the maximum value and minimum value of variable width for the plant gain of all vehicles to be subjected.

18. An apparatus as defined in any preceding claim, wherein the minute time L is chosen as a control period, then this system becomes a discrete time system.

**Patentansprüche**

1. Fahrtregler für ein Fahrzeug, mit einer Geschwindigkeitsfühlerschaltung (12, 22, 43, 89, 91, 121, 131, 151, 181) zum Messen der Istgeschwindigkeit V(t) des Fahrzeuges (18, 28, 47, 97, 127, 137, 157, 189) zu einem Zeitpunkt t, mit einem Betätigungsglied (16, 26, 45, 88, 96, 126, 136, 156, 188) zum Verstellen der Geschwindigkeit des Fahrzeuges über eine Dornklappe (17, 27, 46, 88) eines Antriebsmotors, mit einer Sollwerteinstellschaltüng (13, 23, 41, 81, 92, 122, 132, 152, 182) zum Einstellen einer Sollgeschwindigkeit Vset, mit einem Steuergrößenrechner (14, 24, 44, 86, 95, 125, 135, 155, 187) zum Berechnen einer dem Betätigungsglied (16, 26, 45, 88, 96, 126, 136, 156, 188) zuzuleitenden Steuergröße zum Verstellen der Geschwindigkeit des Fahrzeuges (18, 28, 47, 97, 127, 137, 157, 189), dadurch gekennzeichnet, daß eine Sollkurveneinstelleinrichtung (15, 25, 42, 85, 94, 123, 133, 153, 183) zum Einstellen einer Sollkurvengeschwindigkeit Vd(t) als Funktion der Zeit t vorgesehen ist, und daß der Steuergrößenrechner (14, 24, 44, 86, 95, 125, 135, 155, 187) die dem Betätigungsglied (16, 26, 45, 88, 96, 126, 136, 156, 188) zuzuleitende Steuergröße durch Anwendung eines Regelgesetzes einer Zeitverzögerungsregelung berechnet, wobei das Ausgangssignal V(t) der Geschwindigkeitsfühlerschaltung (12, 22, 43, 89, 91, 121, 131, 151, 181) der Sollgeschwindigkeit Vset entlang der Sollkurve entspricht, die Sollkurvengeschwindigkeit Vd(t) vorgibt.

2. Fahrtregler nach Anspruch 1,
dadurch gekennzeichnet, daß eine Kommandoschaltung (11, 21) vorgesehen ist zur Abgabe eines Fahrtregler-Startsignals, eines Fahrtregler-Löschsignals und eines Wiederaufnahmesignals zum Wiederaufnehmen der vorherigen Fahrtregler-Geschwindigkeit, die vor dem Löschen des vorher eingestellten Fahrtreglerbetriebes eingestellt war,
daß die Sollwerteinstellschaltung (13, 23) die Sollgeschwindigkeit aufgrund des Fahrtregler-Startsignals der Kommandoschaltung (11, 21) einstellt,
daß der Steuergrößenrechner (14, 24) die Stabilität des Regelsystems in einer solchen Weite sicherstellt, daß die Größe einer Regeleingangscharakteristik $b_{est}$ zur Entscheidung über den Wert der Regelverstärkung ein Wert ist, der höher als der halbe Wert der Arbeitsverstärkung eines Modells ist, in dem ein Eingangssignal einem Eingangssignal für das Betätigungsglied (16, 26) und ein Ausgangssignal einer Geschwindigkeit des Fahrzeuges (18, 28) entspricht, und zwar in Form eines adaptiven Regelprozesses zur Annahme einer unbekannten Größe bei Anwendung einer bekannten Größe, die einen kurzen Zeitraum L vor der unbekannten Größe auftrat, wobei angenommen wurde, daß die Änderung der unbekannten Größe in Bezug auf den Modellfehler des Modells und irgendwelche Störungen von außen für diesen kleinen Zeitraum L konstant sind, und
daß die Sollkurveneinstelleinrichtung (15, 25) Sollkurven für die Sollgeschwindigkeit einstellt, die durch die Istgeschwindigkeit zu erreichen gilt, wenn das Wiederaufnahmesignal von der Kommandoschaltung (11, 21) abgegeben wird, wobei zwei oder mehr Sollkurven voreinstellbar sind, die verschieden in der Form und Einstellzeit sowie als Funktion der Zeit dargestellt sind.

3. Fahrtregler nach Anspruch 2,
gekennzeichnet durch Sollkurven-Auswahlmittel (19), durch die der Fahrer des Fahrzeugs (18) eine geeignete der durch die Sollkurveneinstelleinrichtung (15) eingestellten Sollkurven auswählen kann, wodurch die Istgeschwindigkeit sich der Sollgeschwindigkeit entlang der von den Sollkurven-Auswahlmitteln (19) ausgewählten Sollkurve annähert.

4. Fahrtregler nach Anspruch 2,
gekennzeichnet durch Rückkehrgeschwindigkeits-Detektormittel (29) zum Ermitteln einer Abweichung zwischen der Sollgeschwindigkeit und der Istgeschwindigkeit unmittelbar nach dem Erkennen des Wiederaufnahmesignals der Kommandoschaltung (21), wodurch abhängig von der durch die Rückkehrgeschwindigkeits-Detektormittel (29) festgestellten Abweichung diejenige Sollkurve ausgewählt wird, die gegenüber der Sollgeschwindigkeit eine andere Annäherungszeit hat.

5. Fahrtregler nach einem der Ansprüche 2-4,
dadurch gekennzeichnet, daß mehr als zwei Sollkurven vorgesehen sind, die sich voneinander in der Einstellzeit unterscheiden, die gegenüber einer Geschwindigkeitsachse im voraus unterscheiden, und daß die Sollkurven eine glatten Kurvenform in Bezug auf die Wiederaufnahmezeit in der Form einer Tabelle haben, wodurch die Sollkurvengeschwindigkeit entsprechend dem Fehler zwischen der Sollgeschwindigkeit und der Istgeschwindigkeit berechnet werden kann, wenn der Wiederaufnahmeschalter eingeschaltet ist.

6. Fahrtregler nach einem der Ansprüche 2-4,
dadurch gekennzeichnet, daß bei der Wiederaufnahme während der Zeit der Annäherung die Beschleunigung α beträgt, um die Sollkurvengeschwindigkeit und die Einstellgeschwindigkeit entsprechend dem Geschwindigkeitsfehler zu berechnen.

7. Fahrtregler nach Anspruch 1,
dadurch gekennzeichnet, daß der Steuergrößenrechner folgende Größen heranzieht:
- einen Wert U(t-L), der einen kurzen Zeitraum L vorher in der Funktion U(t) auftritt,
- einen Differentialwert u-ter Ordnung der Istgeschwindigkeit V(t), der einen kurzen Zeitraum L vorher aufgetreten ist,
- einen Differentialwert u-ter Ordnung der Sollkurvengeschwindigkeit Vd(t),
- eine Regeleingangscharakteristik $b_{est}$, und
- eine Sollfehlercharakteristik, die eine Differentialgleichung u-ter Ordnung anwendet, mit Differentialwerten, die mit entsprechenden Fehlerrückkopplungskoeffizienten ki (> 0, i = n - 1 bis 0) eines Fehlers e(t) zwischen der Sollkurvengeschwindigkeit Vd(t) und dem Ausgangssignal V(t) der Geschwindigkeitsfühlerschaltung, einem Fehler und der Sollfehlercharakteristik und gegebenenfalls dem Wert der Regeleingangscharakteristik $b_{est}$, der zum Zeitpunkt der Regelverstärkungsberechnung angewandt wird, wobei diese Charakteristik höher als mindestens die Hälfte des Maximalwertes der Arbeitsverstärkung ist.

8. Fahrtregler nach Anspruch 7, gekennzeichnet durch Sollkurven-Annäherungsmittel (94) zum Auffinden einer neuen Sollkurvengeschwindigkeit Vd(t) unter Anwendung von mindestens einer Kurvenänderungsregel, um eine neue Sollkurvengeschwindigkeit Vd(t) durch Auswertung des Fehlers zwischen der Sollkurvengeschwindigkeit und der Istgeschwindigkeit, oder zumindest eines der Differentialwerte bis zur u-ten Ordnung des Fehlers und der mittleren Geschwindigkeit und Position des Betätigungsgliedes (96) zu ermitteln.

9. Fahrtregler nach Anspruch 8, dadurch gekennzeichnet, daß in der Kurvenänderungsregel der Sollkurven-Änderungsmittel (94) mindestens einer der Fehler in den Differentialwerten der als variable Faktoren eingegebenen Fehler mit einem eingestellten Wert verglichen wird, und daß die mittlere Geschwindigkeit und Position des Betätigungsgliedes mit eingestellten Werten verglichen werden, so daß unter Berücksichtigung der Beziehung zwischen entsprechenden Einstellwerten die Sollkurvengeschwindigkeit Vd(t) von Ausgangsvariablenfaktoren gegeben wird durch einen realen Zahlenwert, eine Berechnung von linearen oder nicht-linearen Funktionen mit mindestens einem der Fehler oder dem Differentialwert des Fehlers, oder durch Anwendung einer Entscheidungsregel mit variablen Zahlen, die die Eingangs- und Ausgangsvariablenfaktoren durch fuzzy-variablen Zahlen ausdrückt.

10. Fahrtregler nach Anspruch 8 oder 9, dadurch gekennzeichnet, daß die Sollkurveneinstelleinrichtung (93) Annäherungsbeschleunigungsänderungsmittel enthält zum Ändern der Beschleunigung $\alpha$ derart, daß diese sich sanft der Sollkurve bis zu der Sollgeschwindigkeit annähert, wenn der Fehler zwischen der Sollgeschwindigkeit und der Istgeschwindigkeit niedriger als ein bestimmter Wert ist, also wenn die Sollkurvengeschwindigkeit Vd(t) eine Geschwindigkeit auf einer geraden Linie liegt, die durch die Beschleunigung $\alpha$ dargestellt wird.

11. Fahrtregler nach Anspruch 10, dadurch gekennzeichnet, daß die Annäherungsbeschleunigungsänderungsmittel dazu ausgebildet sind, die Beschleunigung $\alpha$ zu reduzieren, wenn der Fehler zwischen der Istgeschwindigkeit und der Sollgeschwindigkeit in der Wiederaufnahmephase kleiner als ein bestimmter Einstellwert ist.

12. Fahrtregler nach Anspruch 8 oder 9, dadurch gekennzeichnet, daß die Sollkurveneinstelleinrichtung (93) ein Anfangssollkurvenänderungsmittel zum Finden einer neuen Sollkurvengeschwindigkeit durch derartiges Parallelverschieben der Sollkurvengeschwindigkeit enthält, daß sie zu dem jeweiligen Zeitpunkt mit der Istgeschwindigkeit zusammenfällt, wenn der zum Zeitpunkt des Einschaltens des Wiederaufnahmeschalters gemessene Fehler e(t) größer als ein bestimmter Einstellwert wird.

13. Fahrtregler nach Anspruch 7, gekennzeichnet durch ein Regeleingangskoeffizienten-Entscheidungsmittel (154) zum Bestimmen der Regeleingangscharakteristik $b_{est}$ durch Anwenden einer oder mehrerer Koeffizientenentscheidungsregeln auf der Basis der Schätzung des Fehlers zwischen der Sollkurvengeschwindigkeit und der Istgeschwindigkeit, oder zumindest einer der Differentialwerte des Fehlers bis zur u-ten Ordnung und der mittleren Geschwindigkeit und Position des Betätigungsgliedes (156).

14. Fahrtregler nach Anspruch 13, dadurch gekennzeichnet, daß in der Koeffizienteneinscheidungsregel der Regeleingangskoeffizienten-Entscheidungsmittel (154) mindestens einer der Fehler oder der Differentialwert des Fehlers als variable Faktoren eingegeben werden und mit einem Einstellwert verglichen werden, und daß die mittlere Geschwindigkeit und die Position des Betätigungsgliedes (156) mit Einstellwerten verglichen werden, so daß unter Berücksichtigung der Beziehung zu dem entsprechenden Einstellwerten die Regeleingangscharakteristik $b_{est}$ gegeben ist durch einen realen Zahlenwert, eine Berechnung von linearen oder nichtlinearen Funktionen mit mindestens einem der Fehler oder dem Differentialwert des Fehlers, oder durch Anwendung einer Entscheidungsregel mit variablen Zahlen, die die Eingangs- und Ausgangsvariablenfaktoren durch fuzzy-variable Zahlen ausdrückt.

15. Fahrtregler nach Anspruch 7, gekennzeichnet durch ein Regeleingangskoeffizienten-Entscheidungsmittel (134) zum Berechnen der Regeleingangscharakteristik $b_{est}$ unter Anwendung von mindestens einer der Koeffizientenregeln auf der Basis der Schätzung des Fehlers e(t) oder zumindest eines der Differentialwerte u-ter Ordnung des Fehlers e(t) und der mittleren Bewegungsgeschwindigkeit und der Position des Betätigungsgliedes; ein Koeffizientenbreiten-Änderungsmittel (185) zum Ändern sowohl des Wertes der Anfangsregeleingangscharakteristik $b_{est0}$, der der Maximalwert der Regeleingangscharakteristik ist, als auch des Minimalwertes $b_{est1}$ der Regeleingangscharakteristik entspre-

chend dem Änderungszustand der berechneten Regeleingangscharakteristik $b_{est}$, um die Breite der Regeleingangscharakteristik $b_{est}$ zu ändern; und Anfangsregeleingangs-Rechenmittel (186) zum Berechnen eines Anfangsregeleingangswertes U(0) zum Zeitpunkt des Einstellens und der Wiederaufnahme unter Anwendung des Wertes $b_{est0}$.

16. Fahrtregler nach Anspruch 15, dadurch gekennzeichnet, daß in den Anfangsregeleingangs-Rechenmitteln ein Anfangsregeleingangswert U(0) durch den Wert $V0*a/b_{est0}$ gegeben ist unter Anwendung der Anfangsregeleingangscharakteristik $b_{est0}$ der Geschwindigkeit V0 zum Zeitpunkt des Einstellens und der Wiederaufnahme sowie des Konstantwertes "a".

17. Fahrtregler nach Anspruch 15, dadurch gekennzeichnet, daß in den Koeffizienten-Änderungsmitteln die Anfangswerte des Maximalwertes $b_{est0}$ bzw. des Minimalwertes $b_{est1}$ der Regeleingangscharakteristik dem Maximalwert und dem Minimalwert variabler Breite für die Arbeitsverstärkung aller vorliegenden Fahrzeuge entsprechen.

18. Fahrtregler nach einem der vorstehenden Ansprüche, dadurch gekennzeichnet, daß wenn der kurze Zeitraum L als Regelperiode gewählt wird, das vorliegende System zu einem diskreten Zeitsystem wird.

## Revendications

1. Un dispositif de régulation de vitesse prévu pour l'utilisation dans un véhicule, comprenant: un circuit de détection de vitesse (12, 22, 43, 89, 91, 121, 131, 151, 181) pour détecter une vitesse réelle V(t) du véhicule (18, 28, 47, 97, 127, 137, 157, 189) à un instant (t), un actionneur (16, 26, 45, 88, 96, 126, 136, 156, 188) pour régler la vitesse du véhicule par l'intermédiaire d'un papillon d'accélérateur (17, 27, 46, 88) d'un moteur, un circuit de fixation de valeur de consigne (13, 23, 41, 81, 92, 122, 132, 152, 182) pour fixer une vitesse de consigne Vset, des moyens de calcul de valeur de commande (14, 24, 44, 86, 95, 125, 135, 155, 187) pour calculer une valeur de commande à appliquer à l'actionneur (16, 26, 45, 88, 96, 126, 136, 156, 188), pour régler la vitesse du véhicule (18, 28, 47, 97, 127, 137, 157, 189), caractérisé par des moyens de fixation de profil de consigne (15, 25, 42, 85, 94, 123, 133, 153, 183) pour fixer une vitesse de profil de consigne Vd(t) en fonction du temps t, les moyens de calcul de valeur de commande (14, 24, 44, 86, 95, 125, 135, 155, 187) calculant la valeur de commande à appliquer à l'actionneur (16, 26, 45, 88, 96, 126, 136, 156, 188) par l'intermédiaire d'une loi de commande correspondant à une commande de retard, le signal de sortie V(t) du circuit de détection de vitesse (12, 22, 43, 89, 91, 121, 131, 151, 181) étant la vitesse de consigne Vset le long du profil de consigne que doit donner la vitesse de profil de consigne Vd(t).

2. Un dispositif défini dans la revendication 1, caractérisé par un circuit de génération d'ordres (11, 21) destiné à émettre un signal de début de régulation, un signal d'annulation de régulation et un signal de rétablissement pour ramener la vitesse de régulation à la valeur qu'elle avait précédemment après l'interruption de la régulation présente par l'intermédiaire du signal d'annulation de régulation, le circuit de fixation de valeur de consigne (13, 23) fixant la vitesse de consigne par l'intermédiaire du signal de début de régulation du circuit de génération d'ordres (11, 21), les moyens de calcul de valeur de commande (14, 24) assurant la stabilité du système de commande d'une manière telle que la valeur d'une caractéristique d'entrée de commande "best" pour déterminer la valeur d'un gain de commande, soit supérieure à la moitié de la valeur d'un gain de chaîne cinématique de modèle, dans des conditions dans lesquelles une grandeur d'entrée est la grandeur d'entrée qui est appliquée à l'actionneur (16, 26), tandis qu'une grandeur de sortie est la vitesse du véhicule (18, 28), à titre de sorte de processus de commande adaptatif pour prédire un terme inconnu par l'emploi d'un terme connu qui existait un court intervalle de temps L avant le terme inconnu, en supposant que la variation du terme inconnu relative à l'erreur de modélisation de la chaîne cinématique et à la perturbation provenant de l'extérieur, soit une constante pour le court intervalle de temps L, et les moyens de fixation de profil de consigne (15, 25) fixant des profils pour que la vitesse réelle atteigne la vitesse de consigne, au moyen du signal de rétablissement provenant du circuit de génération d'ordres (11, 21), ces profils comprenant plus de deux profils qui sont fixés à l'avance avec des formes, ou des durées de stabilisation, mutuellement différentes, et qui sont donnés par une fonction du temps.

3. Un appareil défini dans la revendication 2, caractérisé par des moyens de sélection de profil de consigne (19) pour permettre à un conducteur du véhicule (18) de sélectionner un profil approprié parmi les profils qui sont fixés par les moyens de fixation de profil de consigne (15), grâce à quoi la vitesse réelle converge vers la vitesse de consigne en suivant le profil qui est sélectionné par les moyens de sélection de profil de consigne (19).

4. Un appareil défini dans la revendication 2, caractérisé par des moyens de détection d'erreur de vitesse de retour (29) qui sont destinés à extraire un écart entre la vitesse de consigne et la vitesse réelle immédiatement après la reconnaissance du signal de rétablissement provenant du circuit de génération d'ordres (21), grâce à quoi le profil de consigne ayant un temps de convergence différent pour atteindre la vitesse de consigne des moyens de fixation de profil de consigne, est sélectionné conformément à l'écart des moyens de détection d'erreur de vitesse de retour (29).

5. Un appareil défini dans l'une quelconque des revendications 2-4, caractérisé en ce qu'il y a plus de deux profils de consigne, chacun d'eux différant des autres en ce qui concerne la durée de stabilisation, qui est normalisée à l'avance en relation avec un axe de vitesse, et ayant une forme de réponse progressive du temps de rétablissement, lorsqu'on considère une représentation graphique, grâce à quoi on peut calculer la vitesse de profil de consigne conformément à l'erreur entre la vitesse de consigne et la vitesse réelle lorsque l'interrupteur de rétablissement est fermé.

6. Un dispositif défini dans l'une quelconque des revendications 2-4, caractérisé en ce qu'il existe une accélération α pour le temps de convergence vers la vitesse de consigne pendant l'intervalle de temps de rétablissement, ce qui permet de calculer la vitesse de profil de consigne pour la durée de stabilisation en fonction de l'erreur de vitesse.

7. Un appareil défini dans la revendication 1, caractérisé en ce que les moyens de calcul de valeur de commande utilisent une valeur U(t-L) qui existe un court intervalle de temps L avant U(t), une valeur différentielle d'ordre n un court intervalle de temps L avant la vitesse réelle V(t), une valeur différentielle d'ordre n de la vitesse de profil de consigne Vd(t), une caractéristique d'entrée de commande "best", et une caractéristique d'erreur de consigne qui fournit une équation différentielle d'ordre n dans laquelle les valeurs différentielles sont multipliées par les coefficients de rétroaction d'erreur respectifs ki (> 0, i = n-1 à 0) d'une erreur e(t) entre la vitesse de profil de consigne Vd(t) et la grandeur de sortie V(t) du circuit de détection de vitesse, une erreur et la caractéristique d'erreur de consigne, et, dans le cas de la valeur de la caractéristique d'entrée de commande "best" qui est employée au moment du calcul du gain de commande, cette valeur étant supérieure à la moitié au moins de la valeur maximale du gain de la chaîne cinématique.

8. Un appareil défini dans la revendication 7, caractérisé par des moyens de modification de profil de consigne (94) destinés à trouver une nouvelle vitesse de profil de consigne Vd(t) en employant au moins une règle de modification de profil, pour donner une nouvelle vitesse de profil de consigne Vd(t), en évaluant l'erreur entre la vitesse de profil de consigne et la vitesse réelle, ou au moins l'une des valeurs différentielles jusqu'à l'ordre n de l'erreur, et la vitesse et la position moyennes de l'actionneur (96).

9. Un appareil défini dans la revendication 8, dans lequel dans la règle de modification de profil des moyens de modification de profil de consigne (94), au moins une valeur parmi la valeur d'erreur et les valeurs différentielles de l'erreur qui sont des facteurs variables appliqués en entrée, est comparée avec une valeur fixée, et la vitesse et la position moyennes de l'actionneur (96) sont comparées avec des valeurs fixées, de façon qu'en considération de la relation avec les valeurs fixées respectives, la vitesse de profil de consigne Vd(t) de facteurs variables de sortie soit donnée par une valeur numérique réelle, et un calcul de fonctions linéaires ou non linéaires employant au moins l'erreur ou la valeur différentielle de l'erreur, ou employant un nombre variable, détermine la règle exprimant les facteurs variables d'entrée et de sortie avec des nombres variables utilisant la logique floue.

10. Un appareil défini dans la revendication 8 ou 9, dans lequel les moyens de fixation de profil de consigne (93) comprennent des moyens de changement d'accélération de convergence, pour changer l'accélération α de façon à faire converger progressivement le profil de consigne vers la vitesse de consigne lorsque l'erreur entre la vitesse de consigne et la vitesse réelle est inférieure à une certaine valeur fixée, dans le cas où la vitesse de profil de consigne Vd(t) est une vitesse située sur une ligne droite qui est donnée par une accélération α.

11. Un appareil défini dans la revendication 10, dans lequel les moyens de changement d'accélération de convergence sont conçus de façon à réduire l'accélération α lorsque l'erreur entre la vitesse réelle et la vitesse de consigne au moment du rétablissement devient inférieure à une certaine valeur fixée.

12. Un appareil défini dans la revendication 8 ou 9, dans lequel les moyens de fixation de profil de consigne (93) comprennent des moyens de changement de profil de consigne initial qui sont destinés à trouver une nouvelle vitesse de profil de consigne par décalage de la vitesse de profil de consigne de manière parallèle, de façon à la faire coïncider avec la vitesse réelle au moment considéré, lorsque l'erreur e(t) qui a été mesurée à partir de l'instant de fermeture de l'interrupteur de rétablissement, devient supérieure à une certaine valeur fixée.

13. Un appareil défini dans la revendication 7, caractérisé par des moyens de décision de coefficient d'entrée de commande (154) destinés à trouver la caractéristique d'entrée de commande "best" en utilisant plus d'une règle de décision de coefficient, au moment de l'estimation de l'erreur entre la vitesse de profil de consigne et la vitesse réelle, ou l'une au moins des valeurs différentielles de l'erreur jusqu'à l'ordre n, et la vitesse et la position moyennes de l'actionneur (156).

14. Un appareil défini dans la revendication 13, dans lequel dans la règle de décision de coefficient des moyens de décision de coefficient d'entrée de commande (154), l'un au moins des paramètres comprenant l'erreur et la valeur différentielle de l'erreur, qui sont des facteurs variables appliqués en entrée, est comparé avec une valeur fixée, et la vitesse et la position moyennes de l'actionneur (156) sont comparées avec des valeurs fixées, de façon qu'en considération de la relation avec les valeurs fixées respectives, la caractéristique d'entrée de commande "best" soit donnée par une valeur numérique réelle, un calcul de fonctions linéaires ou non linéaires employant l'un au moins des paramètres comprenant l'erreur ou la valeur différentielle de l'erreur, ou employant une règle de décision de nombre variable exprimant des facteurs variables d'entrée et de sortie avec des nombres variables utilisant la logique floue.

15. Un appareil défini dans la revendication 7, caractérisé par des moyens de décision de coefficient d'entrée de commande (184) pour calculer la caractéristique d'entrée de commande "best" en employant l'une au moins des règles de coefficient au moment de l'estimation de l'erreur e(t), ou l'une au moins des valeurs différentielles d'ordre n de l'écart e(t), et la vitesse de déplacement et la position moyennes de l'actionneur (188),

des moyens de modification de largeur de coefficient (185) pour changer à la fois la valeur de la caractéristique d'entrée de commande initiale "best0", qui est la valeur maximale de la caractéristique d'entrée de commande, et la valeur minimale "best1" de la caractéristique d'entrée de commande, conformément à la condition variable de la caractéristique d'entrée de commande calculée "best", pour restreindre la largeur de changement de la caractéristique d'entrée de commande "best", et

des moyens de calcul de grandeur d'entrée de commande initiale (186), pour calculer une grandeur d'entrée de commande initiale U(0) au moment de la fixation et du rétablissement, par l'emploi de la valeur "best0".

16. Un appareil défini dans la revendication 15, dans lequel dans les moyens de calcul de grandeur d'entrée de commande initiale, une grandeur d'entrée de commande initiale U(0) est donnée par la valeur de V0∗a/best0, en employant la caractéristique d'entrée de commande initiale "best0", la vitesse V0 au moment de la fixation et du rétablissement, et la valeur constante "a".

17. Un appareil défini dans la revendication 15, dans lequel dans les moyens de modification de largeur de coefficient, les valeurs initiales du maximum "best0" et du minimum "best1" de la caractéristique d'entrée de commande, sont respectivement la valeur maximale et la valeur minimale de la largeur de variable pour le gain de chaîne cinématique de tous les véhicules concernés.

18. Un appareil défini dans l'une quelconque des revendications précédentes, dans lequel le court intervalle de temps L est choisi à titre de période de commande, et le système devient alors un système à instants discrets.

Fig. 1

time delay control of path following type

plant

18 body

16 actuator

17 throttle valve

14 control amount operation means

15 target path setting means

12 speed detecting circuit

13 target value setting circuit

19 target path selecting means

11 command circuit

22

## Fig. 2

time delay control of
path following type          plant

**22** speed detecting circuit

**21** command circuit

**23** target value setting circuit

**29** return speed deviation detecting circuit

**24** control amount operation means

**25** target path setting means

**26** actuator

**27** throttle valve

**28** body

EP 0 467 353 B1

**Fig. 3**

311 throttle valve
310 actuator
39 solenoid
38 control circuit
33 main switch
34 cancel switch
35 brake switch
36 speed sensor
37 parking neutral SW
31 set coast switch
resume accelerator switch

24

Fig. 4

TDC of path following type

Fig. 5

54 time delay controller of path following type

51 target error property inserting portion

52 unknown property denial portion

53

*Fig. 6*

*Fig. 7*

**(a)**

**(b)**

# Fig. 8

**Fig. 9**

30

EP 0 467 353 B1

**91**
speed detecting circuit

**92**
target value setting circuit

**93**
target path setting means

**94**
target path amending means

**95**
control amount operating means

**96**
actuator

**97**
body

# Fig. 10

Fig. 11

Fig. 12

| 121 | 123 | 126 | 127 |
|---|---|---|---|
| speed detecting circuit | target path setting means | actuator | body |

| 122 | 124 | 125 |
|---|---|---|
| target value setting circuit | convergent acceleration changing means | control amount operating means |

Fig. 13

137    body

136    actuator

135    control amount operating means

133    target path setting means

134    initial control input calculating means

131    speed detecting circuit

132    target value setting circuit

34

# Fig. 14

(a)

target speed

resume on speed

(B) (D) (A) (C)

(b)

control input

(F) (E)

EP 0 467 353 B1

# Fig. 15

Fig. 16

(a)

(b)

EP 0 467 353 B1

Fig. 17(a)

38

**Fig. 17(b)**

Fig. 18

181 speed detecting circuit

182 target value setting circuit

183 target path setting means

184 control input coefficiency determining means

185 coefficient width amending means

186 initial control input calculating means

187 control amount opearating means

188 actuator

189 body

## Fig. 19(a)

191 — ( cruise start )

192 — best 0 = bMAX > b

best 1 = bMIN < b

(2)

193 — | e(t) | < A ?  — n

y

194 — $\dot{u}(t)\dot{u}(t-L)$ < MS?(MS<0) — y

n

1911 — best 0 = best 0 + zou

195 — HASFLAG = 1 ? — y

n

1912 — best 0 > bMAX ? — n

196 — ta >= T1 ? — n

y

1913 — best 0 = bMAX

y

197 — ta = 0 (reset)

198 — best 0 = best 0 - gen

1914 — HASFLAG = 1

199 — best 0 - best 1 > H ? — y

n

1910 — best 0 = best 1 + H

(1)

# Fig. 19(b)

② → ←

① ↓

1915 **best < bm ?**
— Y → 1916 **tb = 0 (reset)**
1917 **bm = bset**

1918 **best = bm ?** — N → 1926 **tb = 0 (reset)**

1919 **tb >= T2 ?** — N →

1927 **tc >= T3 ?** — N →

1920 **tb = 0 (reset)**

1928 **tc = 0 (reset)**

1921 **bm = best 1 ?** — N →

1929 **best 1 = best 1 + zou**

1922 **tc = 0 (reset)**

1930 **best 0 - best 1 > H ?** — Y →

1923 **best 1 = best 1 - gen**

1931 **best 1 = H - best 0**

1924 **best 1 < bMIN ?** — N →

1932 **best 1 < bm ?** — Y →

1925 **best 1 = bMIN**

1933 **best 1 = bm**

## Fig. 20 (a)

O − X ; 30E+0 S;

X : 8.19E+0 (S)/div ;    + 3 %   5 0 ( k m / h ) → 8 0 ( k m / h )
Y ; 1 1 (km/h) /div ;

Y; speed

time : X

X ; 8.19E+0 (s)/div ;
Y ; 12.5(deg ) /div ;

80

Y : throttle opening

5

time : X

EP 0 467 353 B1

## Fig . 20(b)

0- X;30.00E+0 S;

X ; 8.19E+0 (S)/div ;    0%    50 (km / h)→80 (km / h)
Y ; 11(km/h) /div ;

Y ; speed

time:X

X ; 8.19E+0 (S)/div ;
Y ; 12.5(deg) /div ;

Y; throttle opening

time:X

EP 0 467 353 B1

# Fig. 20 (c)

O – X;30.00E+0 S;

X ; 8.19E+0 (S)/div ; -3% 50 (km / h) → 80 (km / h)
Y ; 1 1(km/h) /div ;

Y; speed

time: X

X ; 8.19E+0 (S)/div ;
Y ; 12.5(deg) /div ;

80

Y; throttle opening

5

time: X

EP 0 467 353 B1

Fig. 20(d)

0 - X ; 20E+0 S;

X ; 8.19E+0 (S)/div ;      +3%   50 (km/ )→80 (km/h)
Y ; 11(km/h) /div ;

Y; speed

time : X

X ; 8.19E+0 (S)/div ;
Y ; 12.5(deg) /div ;

80  Y; throttle opening

5

time : X

EP 0 467 353 B1

# Fig . 20 (e)

O - X ; 20.00E+0  S ;

X ; 8.19E+0 (S)/div ;          0%   5 0 ( k m / h ) → 8 0 ( k m / h )
Y ; 1 1(km/h) /div ;

Y ; speed

time : X

X ; 8.19E+0 (S)/div ;
Y ; 12.5(deg)  /div ;

80

Y ; throttle opening

time : X

5

EP 0 467 353 B1

# Fig . 20 (f)

0 - X;20.00E+0 S;

X ; 8.19E₁0 (S)/div ;    - 3%   5 0 ( k m / h )→8 0 ( k m / h )
Y ; 1 1 km/h /div ;

Y; speed

time : X

X ; 8.19E+0 (S)/div ;
Y ; 12.5(deg)  /div ;

Y; throttle opening

80

5

time : X

# Fig. 21

target pass speed $\nabla d$
real speed $\nabla$

throttle opening $\theta$

control input
property best

Vd

V

I2.75(km/h)/div

I2.5deg/div

10 sec/div

Resume Experiment on chassis ( 0% 50→100 )

EP 0 467 353 B1

# Fig . 22

target pass speed Vd

real speed V

throttle opening θ

control input
property best

12.75(km/h)/div

12.5 deg /div

10 sec /div

Resume Experiment on chassis ( + 3 % 70 → 100 )

EP 0 467 353 B1

## Fig . 23

Road Experiment : 80km/h set operation

## Fig . 24

Road Experiment Response to
slope variation (100 km/h set )

# Fig. 25(a)

+3% 100km/h set operation

+3% 50→100 resume operation

EP 0 467 353 B1

Fig . 25 (b)

12.75 (km/n)div

12.5 deg/d

10 sec/div

best

Vd
V

θ

0% 50 →100 resume operation

Vd
V

best

θ

0% 100km/h set operation

# Fig . 25(c)

-3% 100 km/h set operation

-3% 50→100 resume operation

12.75 (km/h)div

12.5 deg/d

10 sec/div

EP 0 467 353 B1

Fig . 25.(d)

+3% → −3%          −3% → +3%          10 sec/div

Experiment on slope variation (100km/h)

# Fig. 26 (a)

+3% 100 km/h set operation

+3% 50→100 resume operation

12.75 (km/h)/d

12.5 deg/d

10 sec/div

EP 0 467 353 B1

# Fig. 26(b)

0% 100 km/h set operation                    0% 50→100 resume operation

EP 0 467 353 B1

## Fig . 26 (c)

Vd
V

best

θ

-3% 100km/h set operation

best

Vd
V

θ

12.75
(km/h)/d

12.5
deg/d

10 sec/div

-3% 50→100 resume operation

EP 0 467 353 B1

Fig. 26(d)

Vd
V
best

θ

12.75
(km/h)div

12.5
deg/div

10 sec/div

+3% → -3% → +3%

Experiment on slope variation (100km/h)